(19) Europäisches Patentamt / European Patent Office / Office européen des brevets

(11) **EP 3 541 020 B1**

(12) **EUROPEAN PATENT SPECIFICATION**

(45) Date of publication and mention
of the grant of the patent:
**23.02.2022 Bulletin 2022/08**

(21) Application number: **19167768.1**

(22) Date of filing: **22.06.2012**

(51) International Patent Classification (IPC):
**H04N 21/262** *(2011.01)*    **H04N 21/643** *(2011.01)*
**H04N 21/647** *(2011.01)*    **H04L 12/833** *(2013.01)*
**H04L 12/865** *(2013.01)*    **H04L 12/863** *(2013.01)*
**H04L 12/26** *(2006.01)*    **H04W 72/12** *(2009.01)*
**H04L 12/867** *(2013.01)*    **H04L 29/06** *(2006.01)*

(52) Cooperative Patent Classification (CPC):
**H04L 47/6295; H04L 43/028; H04L 47/2458;**
**H04L 47/6275; H04N 21/262; H04N 21/64322;**
**H04N 21/64707; H04N 21/64723; H04N 21/64784;**
H04L 47/629; H04L 63/0227; H04W 72/1242

(54) **ENHANCED PACKET INSPECTION MODULES AND METHODS**

VERBESSERTE PAKETINSPEKTIONSMODULE UND -VERFAHREN

MODULES ET PROCÉDÉS AMÉLIORÉS D'INSPECTION DE PAQUETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2011    US 201113166660**
**19.09.2011    US 201113236308**
**14.02.2012    US 201213396503**

(43) Date of publication of application:
**18.09.2019   Bulletin 2019/38**

(62) Document number(s) of the earlier application(s) in
accordance with Art. 76 EPC:
**12803041.8 / 2 724 490**

(73) Proprietor: **Taiwan Semiconductor Manufacturing
Company, Ltd.**
**Hsinchu 300-78 (TW)**

(72) Inventors:
• **GELL, David**
**San Diego, CA California 92128 (US)**
• **STANWOOD, Kenneth L.**
**San Diego, CA California 92128 (US)**

• **CHINNATHAMBI, Gopinath Murali**
**San Diego, CA California 92128 (US)**
• **XU, Haibo**
**San Diego, CA California 92128 (US)**
• **EL ARABAWY, Ahmed**
**San Diego, CA California 92128 (US)**
• **BAO, Yiliang**
**San Diego, CA California 92128 (US)**

(74) Representative: **FRKelly**
**27 Clyde Road**
**Dublin D04 F838 (IE)**

(56) References cited:
**EP-A1- 2 182 694    US-A1- 2011 141 924**
**US-B1- 7 342 897**

• **LAURENT BERNAILLE ET AL: "Traffic
classification on the fly", COMPUTER
COMMUNICATION REVIEW, ACM, NEW YORK,
NY, US, vol. 36, no. 2, 28 April 2006 (2006-04-28) ,
pages 23-26, XP058222541, ISSN: 0146-4833,
DOI: 10.1145/1129582.1129589**

EP 3 541 020 B1

**Description**

BACKGROUND

The present invention generally relates to the field of communication systems and to systems and methods for detection for prioritizing and scheduling packets in a communication network.

In a communication network, such as an Internet Protocol (IP) network, each node and subnet has limitations on the amount of data which can be effectively transported at any given time. In a wired network, this is often a function of equipment capability. For example, a Gigabit Ethernet link can transport no more than 1 billion bits of traffic per second. In a wireless network the capacity is limited by the channel bandwidth, the transmission technology, and the communication protocols used. A wireless network is further constrained by the amount of spectrum allocated to a service area and the quality of the signal between the sending and receiving systems. Because these aspects can be dynamic, the capacity of a wireless system may vary over time.

Additionally, each node has limitations on the processing in can perform. Increasing the processing available may be expensive or may require the node to be taken out of service. Furthermore, a node may have many different functions that compete for the available processing. Even when sufficient processing ability is available, its use carries a cost, for example, in power consumption.

SUMMARY

The present invention provides a communication device as recited in claim 1.

Other features and advantages of the present invention should be apparent from the following description which illustrates, by way of example, aspects of the invention.

BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 is a block diagram of a wireless communication network in which the systems and methods disclosed herein can be implemented according to an embodiment;

FIG. 2 is block diagram of another wireless communication network in which the systems and methods disclosed herein can be implemented according to an embodiment;

FIG. 3 is a functional block diagram of a station according to an embodiment;

FIG. 4 is a diagram illustrating protocol layers according to an embodiment;

FIG. 5 is a block diagram illustrating a parameterized scheduling module that can be used to implement scheduling techniques according to an embodiment;

FIG. 6 is a block diagram illustrating the relationship between heterogeneous input traffic and individual queues in a queuing system according to an embodiment;

FIG. 7 is a flowchart of a method for queuing data packets to be transmitted across a network medium using a parameterized scheduling technique according to an embodiment;

FIG. 8 is a block diagram illustrating a wireless communication system according to an embodiment;

FIG. 9 is a block diagram illustrating an enhanced packet inspection module for use in an enhanced classification/queuing module according to an embodiment;

FIG. 10 is a block diagram illustrating an enhanced packet inspection module for use in an enhanced classification/queuing module according to an embodiment;

FIG. 11 is a table illustrating an example of a mapping between application classes and specific applications that can be used in the various techniques disclosed herein;

FIG. 12 is a diagram illustrating an example of an RTSP packet encapsulated within a TCP/IP frame according to an embodiment;

FIG. 13 is a functional block diagram of a packet inspection module according to an embodiment;

FIG. 14 is a diagram illustrating an example of an RTP packet, including RTP header and RTP payload which contains H.264 video data according to an embodiment;

FIG. 15 is a diagram illustrating an example of an RTP packet with padded octets according to an embodiment;

FIG. 16 is a table illustrating sample application factor assignments on per application class and per specific application basis according to an embodiment;

FIG. 17 is a table illustrating enhanced weight factor calculations according to an embodiment;

FIG. 18 is a timing diagram illustrating management of coefficients that can be used in enhanced weight factor or credit calculations disclosed herein;

FIG. 19 is a flowchart of a method for calculating coefficients according to an embodiment;

FIG. 20 is a diagram illustrating traffic shaping by a parameterized scheduling system with enhanced packet classification and queuing according to an embodiment;

FIG. 21 is a functional block diagram of a packet inspection module according to an embodiment;

FIG. 22 is a flowchart of a process for detecting initiation of connections according to an embodiment;

FIG. 23 is a flowchart of a process for monitoring connections according to an embodiment; and

FIG. 24 is a graph illustrating bitrate versus time of an example video download.

## DETAILED DESCRIPTION

Systems and methods for providing a parameterized scheduling system that incorporates end-user application awareness are provided. The systems and methods disclosed herein can be used with scheduling groups that contain data streams from heterogeneous applications. Some embodiments use packet inspection to classify data traffic by end-user application. Individual data queues within a scheduling group can be created based on application class, specific application, individual data streams or some combination thereof. Embodiments use application information in conjunction with Application Factors (AF) to modify scheduler parameters, thereby differentiating the treatment of data streams assigned to a scheduling group. In an embodiment, a method for adjusting the relative importance of different user applications through the use of dynamic AF settings is provided to maximize user QoE in response to recurring network patterns, one-time events, or both. In an embodiment, a method for maximizing user QoE for video applications by dynamically managing scheduling parameters is provided. This method incorporates the notions of "duration neglect" and "recency effect" in an end-user's perception of video quality (i.e. video QoE) in order to optimally manage video traffic during periods of congestion.

The systems and methods disclosed herein can be applied to various capacity-limited communication systems, including but not limited to wireline and wireless technologies. For example, the systems and methods disclosed herein can be used with Cellular 2G, 3G, 4G (including Long Term Evolution ("LTE"), LTE Advanced, WiMax), WiFi, Ultra Mobile Broadband ("UMB"), cable modem, and other wireline or wireless technologies. Although the phrases and terms used herein to describe specific embodiments can be applied to a particular technology or standard, the systems and methods described herein are not limited to these specific standards.

### Basic Deployments

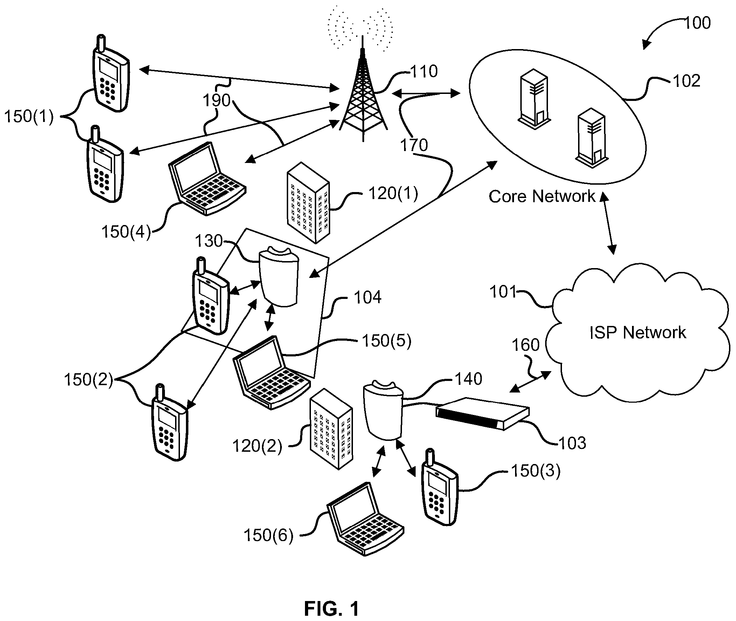

FIG. 1 is a block diagram of a wireless communication network in which the systems and methods disclosed herein can be implemented according to an embodiment. FIG. 1 illustrates a typical basic deployment of a communication system that includes macrocells, picocells, and enterprise femtocells. In a typical deployment, the macrocells can transmit and receive on one or many frequency channels that are separate from the one or many frequency channels used by the small form factor (SFF) base stations (including picocells and enterprise or residential femtocells). In other embodiments, the macrocells and the SFF base stations can share the same frequency channels. Various combinations of geography and channel availability can create a variety of interference scenarios that can impact the throughput of the communications system.

FIG. 1 illustrates an example of a typical picocell and enterprise femtocell deployment in a communications network 100. Macro base station 110 is connected to a core network 102 through a backhaul connection 170. In an embodiment, the backhaul connection 170 is a bidirectional link, or two unidirectional links. The direction from the network 102 to the macro base station 110 is referred to as the downstream or downlink direction. The direction from the macro base station 110 to the core network 102 is referred to as the upstream or uplink direction. Subscriber stations 150(1) and 150(4) can connect to the core network 102 through macro base station 110. Wireless links 190 between subscriber stations 150 and the macro base station 110 are bidirectional point-to-multipoint links in an embodiment. The direction of the wireless links 190 from the macro base station 110 to the subscriber stations 150 is referred to as the downlink or downstream direction. The direction of the wireless links 190 from the subscriber stations 150 to the macro base station 110 is referred to as the uplink or upstream direction. Subscriber stations are sometimes referred to as user equipment (UE), users, user devices, handsets, or terminals. In the network configuration illustrated in FIG. 1, office building 120(1) causes a coverage shadow 104. Pico station 130, which is connected to core network 102 via backhaul connection 170, can provide coverage to subscriber stations 150(2) and 150(5) in coverage shadow 104. The subscriber stations 150(2) and 150(5) may be connected to the pico station 130 via links that are the same or similar to the wireless links 190 between subscriber stations 150(1) and 150(4) and macro base station 110.

In office building 120(2), enterprise femtocell 140 provides in-building coverage to subscriber stations 150(3) and 150(6). Enterprise femtocell 140 can connect to core network 102 via ISP network 101 by utilizing broadband connection 160 provided by enterprise gateway 103.

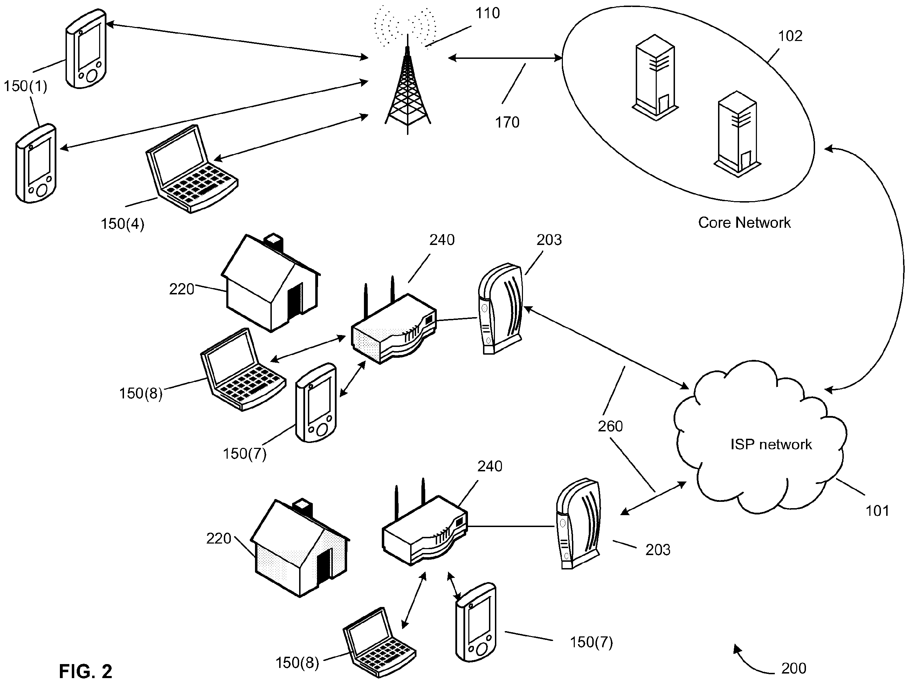

FIG. 2 is a block diagram of another wireless communication network in which the system and methods disclosed herein is implemented according to an embodiment. FIG. 2 illustrates a typical basic deployment in a communications network 200 that includes macrocells and residential femtocells deployed in a residential environment. Macrocell base station 110 is connected to core network 102 through backhaul connection 170. Subscriber stations 150(1) and 150(4) can connect to the network through macro base station 110. Inside residences 220, residential femtocell 240 can provide in-home coverage to subscriber stations 150(7) and 150(8). Residential femtocells 240 can connect to core network 102 via ISP network 101 by utilizing broadband connection 260 provided by cable modem or DSL modem 203. The subscriber stations 150(7) and 150(8) may be connected to residential femtocell 260 via links that are similar to the wireless links 190 between subscriber stations 150(1) and 150(4) and macro base station 110.

Data networks (e.g. IP), in both wireline and wireless forms, have minimal capability to reserve capacity for a particular connection or user, and therefore demand may exceed capacity. This congestion effect may occur on both wired and wireless networks.

During periods of congestion, network devices must decide which data packets are allowed to travel on a network, i.e., which traffic is forwarded, delayed, or discarded. In a simple case, data packets are added to a fixed length queue and sent on to the network as capacity allows. During times of network congestion, the fixed length queue may fill to capacity. Data packets that arrive when the queue is full are typically discarded until the queue is drained of enough data to allow queuing of more data packets. This first-in-first-out (FIFO) method has the disadvantage of treating all packets with equal fairness, regardless of user, application, or urgency. This is an undesirable response as it ignores that each data stream can have unique packet delivery requirements, based upon the applications generating the traffic (e.g. voice, video, email, internet browsing, etc.). Different applications degrade in different manners and with differing severity due to packet delay and/or discard. Thus, a FIFO method is said to be incapable of managing traffic in order to maximize an end user's experience, often termed Quality of Experience (QoE).

In response, technologies have been developed to categorize packets and to treat data streams with differing levels of importance and/or to manage to differentiated levels of service. A data stream may be a stream of related packets from a single user application, for example, video packets of a YouTube video or the video packet portion of a video Skype session.

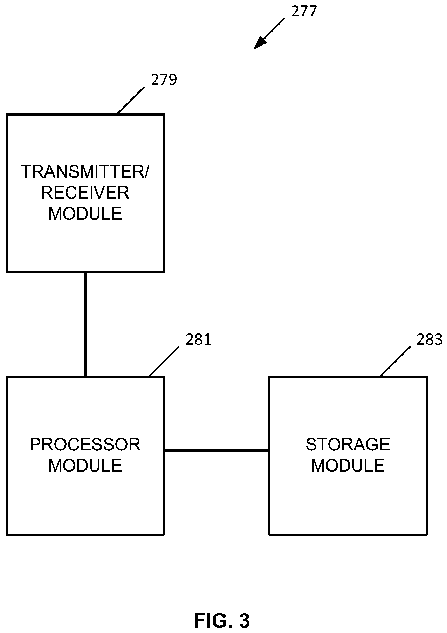

FIG. 3 is a functional block diagram of a station 277. In some embodiments, the station 277 is a wireless or wireline access node, such as a base station, an LTE eNB (Evolved Node B, which is also often referred to as eNodeB), a UE, a terminal device, a network switch, a network router, a gateway, subscriber station, or other network node (e.g., the macro base station 110, pico station 130, enterprise femtocell 140, enterprise gateway 103, residential femtocell 240, cable modem or DSL modem 203, or subscriber stations 150 shown in FIGS. 1 and 2). The station 277 comprises a processor module 281 communicatively coupled to a transmitter receiver module (transceiver) 279 and to a storage module 283. The transmitter receiver module 279 is configured to transmit and receive communications with other devices. In one embodiment, the communications are transmitted and received wirelessly. In such embodiments, the station 277 generally includes one or more antennae for transmission and reception of radio signals. In another embodiment, the communications are transmitted and received over wire. In many embodiments, the station 277 transmits and receives communications via another communication channel in addition to the transmitter receiver module 279. For example, communications received via the transmitter receiver module 279 in a base station may be transmitted, after processing, on a backhaul connection. Similarly, communication received from the backhaul connection may be transmitted by the transmitter receiver module 279.

The processor module 281 is configured to process communications being received and transmitted by the station 277. The storage module 283 is configured to store data for use by the processor module 281. In some embodiments, the storage module 283 is also configured to store computer readable instructions for accomplishing the functionality described herein with respect to the station 277. In one embodiment, the storage module 283 includes a non-transitory machine readable medium. For the purpose of explanation, the station 277 or embodiments of it such as the base station, subscriber station, and femto cell, arc described as having certain functionality. It will be appreciated that in some embodiments, this functionality is accomplished by the processor module 281 in conjunction with the storage module 283 and transmitter receiver module 279.

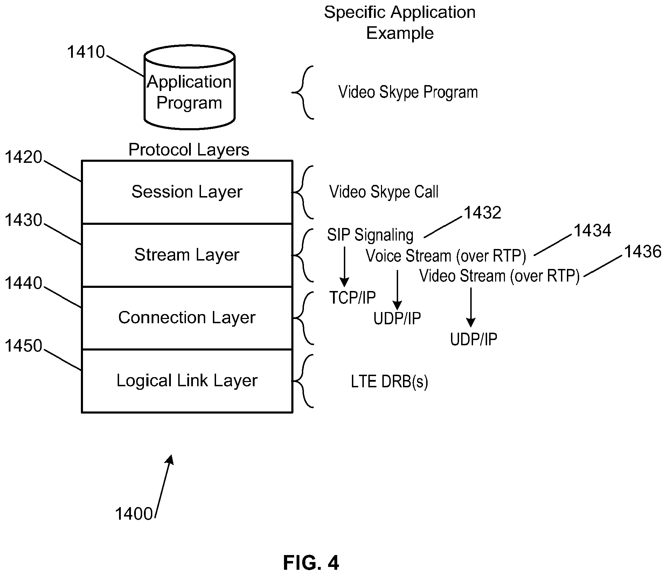

FIG. 4 illustrates exemplary protocol layers 1400 that may be used in describing the flow of data through a network. Networks use layers of protocols to abstract the functions of one layer from those provided by another layer. This can allow greater portability of applications to different networks. An application program 1410 is software or other processes that implement a specific application, for example, video Skype. In networks such as those depicted in FIGS. 1 and 2, initiation and subsequent termination of flows of packets may be triggered by particular network applications or services. The flow of packets relating to the use of an end-user application or service may be termed a session. Examples of sessions include a voice over internet protocol (VoIP) call using the Skype application from a laptop, streaming video playback using a YouTubc app running on an Android-based mobile phone, or a 2-way video call using the Apple iChat application running over an IP Multimedia Subsystem (IMS) enabled Long Term Evolution (LTE) mobile network. A session layer 1420 is the layer at which an actual instance, or session, of a video Skype call exists.

Many different nodes in a network (e.g., application server, proxy server, transport device such as a network switch or router, storage device, end-user device such as a smart phone, tablet, or laptop) may initiate or participate in a session. Nodes may host one or more sessions simultaneously. The simultaneous sessions may be independent from one another (e.g., a user using Facebook and email simultaneously) or related to each other (e.g., a browsing session which spawns two video streaming sessions). A session may be established between two nodes. Alternatively, sessions may be viewed as a relationship between one node and many nodes, for example, through the use of multicast and broadcast protocols.

Sessions may be characterized or categorized by various criteria. One criterion is the specific application (for example, the application program or software 1410) that was initiated by the user and was responsible for launching the session. Examples of specific applications include a YouTube app, a Chrome internet browser, and a Skype voice calling program. Another criterion is the application class that describes the overall function served by a particular session. Example application classes include streaming video, voice calling, internet browsing, email, and gaming.

A stream layer 1430 is the layer at which individual data streams that make up the session exist. A session may consist of one or more independent data streams using the same or potentially different underlying connections. For example, a single VoIP phone call session may contain two data streams. One data stream may serve the bidirectional voice traffic (which may be payload or data plane packets) using a UDP connection. A second data stream may use one or more TCP connections to handle call setup/teardown (which may be signaling or control plane packets), as for example when using the session initiation protocol (SIP). In another example, for a video Skype call, there may be one stream to carry SIP signaling, to start, stop, and otherwise control the session, a second stream carrying voice packets using the Real-Time Transport (RTP) protocol, and a third stream carrying video packets using the RTP protocol.

A connection layer 1440 is the layer where the stream layer 1430 data is transported over some logical link provided by a logical link layer 1450. The connection layer 1440 protocols are neither application specific nor physical medium specific. A connection may refer to the underlying protocols used to transport session data and messages and to the group of packets, messages, and transactions used to establish (initiate) or remove (terminate) the connection. For example, a connection-oriented socket may be established via the Transmission Control Protocol (TCP) between two nodes of an Internet Protocol (IP) network using a combination of IP addresses and port numbers. Once established, this TCP connection may be used to transport packets, for example, packets of a hyper-text transport protocol (HTTP) streaming video session. In an alternative to a TCP connection, a datagram socket can be established to transport traffic using the User Datagram Protocol (UDP).

In the video Skype example, at the connection layer 1440, a SIP signaling stream 1432 is transported over a TCP/IP connection identified by source and destination IP addresses and TCP ports while a voice stream 1434 and a video stream 1436 are each transported over UDP/IP connections identified by source and destination IP addresses and UDP sockets. While the UDP protocol is considered connectionless, it is convenient to use the term connection to also describe the UDP mechanisms that ensure the transport of data packets from the data source to the data sink for a stream.

The logical link layer 1450 is the layer at which a logical link exists that abstracts the actual physical medium and its transport mechanisms from the layers above. For example, in an LTE system, multiple connections (each carrying a stream) of the video Skype session arc carried within an LTE data radio bearer (DRB) (for example, over wireless link 190 of FIG. 1). The DRB may be a continuation of a tunnel from a packet gateway to an eNodeB during the period when the data is traversing backhaul link 170 of FIG. 1.

Performance Requirements

One method to assign importance and to optimize resource allocation between different data streams is through the use of desired performance requirements. For example, performance requirements may include desired packet throughput, and tolerated latency and jitter. Such performance requirements may be assigned based upon the type of data or supported application. For example, a voice over internet protocol (VoIP) phone call may be assigned the following performance requirements suited for the packet based transmission of voice through an IP network: throughput = 32 kilobits per second (kbps), maximum latency = 100 milliseconds (ms), and maximum jitter = 10 ms. In contrast, a data stream which carries video may require substantially more throughput, but may allow for slightly relaxed latency and jitter performance as follows: throughput = 2 megabits per second (Mbps), maximum latency = 300 ms, maximum jitter = 60 ms.

Scheduling algorithms located at network nodes can use these performance requirements to make packet forwarding decisions in an attempt to best meet each stream's requirements. The sum total of a stream's performance requirements is often described as the quality of service, or QoS, requirements for the stream.

Priority

Another method to assign importance is through the use of relative priority between different data streams. For example, standards such as the IEEE 802.1p and IETF RFC 2474 Diffserv define bits within the IP frame headers to carry such priority information. This information can be used by a network node's scheduling algorithm to make forwarding decisions, as is the case with the IEEE 802.11e wireless standard. Additional characteristics of a packet or data stream can also be mapped to a priority value, and passed to the scheduling algorithm. The standard 802.16e, for example, allows characteristics such as IP source/destination address or TCP/UDP port number to be mapped to a relative stream priority while also considering performance requirements such as throughput, latency, and jitter.

Scheduling Groups

In some systems, data streams may be assigned to a discrete number of scheduling groups, defined by one or more common characteristics of scheduling method, member data streams, scheduling requirements or some combination thereof.

For example, scheduling groups can be defined by the scheduling algorithm to be used on member data streams (e.g., scheduling group #1 may use a proportional fair algorithm, while scheduling group #2 uses a weighted round-robin algorithm).

Alternatively, a scheduling group may be used to group data streams of similar applications (e.g., voice, video or background data). For example, Cisco defines six groups to differentiate voice, video, signaling, background, and other data streams. This differentiation of application may be combined with unique scheduling algorithms applied to each scheduling group.

In another example, the Third Generation Partnership Program (3GPP) has established a construct termed QoS Class Identifiers (QCI) for use in the Long Term Evolution (LTE) standard. The QCI system has 9 scheduling groups defined by a combination of performance requirements, scheduler priority and user application. For example, the scheduling group referenced by QCI index = 1 is defined by the following characteristics:

(1) Performance Requirements: Latency = 100 ms, Packet Loss Rate = $10^{-2}$, Guaranteed Bit Rate
(2) Priority: 2
(3) Application: Conversational Voice

The term 'class of service' (or CoS) is sometimes used as a synonym for scheduling groups.

Weight-based Scheduling Systems

In systems as described above, one or more data streams can be assigned an importance and a desired level of performance. This information may be used to assign packets from each data stream to a scheduling group and data queue. A scheduling algorithm can also use this information to decide which queues (and therefore which data streams and packets) to treat preferentially to others in both wired and wireless systems.

In some scheduling algorithms the importance and desired level of service of each queue is conveyed to the scheduler through the use of a scheduling weight. For example, weighted round robin (WRR) and weighted fair queuing (WFQ) scheduling methods both use weights to adjust service among data queues. In some scheduling algorithms the importance and desired level of service of each queue is conveyed to the scheduler through the use of credits and debits. For example, a proportional fair scheduler (PFS) method may use credits and debits to adjust service among data queues. Some algorithms use weights and convert them to credits in the form of number of packets or bytes to be served during a scheduling round.

In WRR, all non-empty queues are serviced in each scheduling round, with the number of data packets served from each queue being proportional to the weight of the queue. The weights may be derived from a variety of inputs such as relative level of service purchased (e.g., gold, silver, or bronze service), minimum guaranteed bit rates (GBR), or maximum allowable bit rates. In one example, three queues may have data pending. The queue weights are 1, 3, and 6 for queues 1, 2, and 3 respectively. If 20 packets are to be served during each round, then queues 1, 2, and 3 would be granted 10%, 30%, and 60% of the 20 packet budget or credits of 2, 6, and 12 packets, respectively. One skilled in the art will recognize that other weights can be applied as well and the concepts of weights, credits, and rates can be interchanged.

The WFQ algorithm is similar to WRR in that weighted data queues are established and serviced in an effort to provide a level of fairness across data streams. In contrast to WRR, WFQ serves queues by looking at number of bytes served, rather than number of packets. WFQ works well in systems where data packets may be fragmented into a number of pieces or segments, such as in WiMAX systems. In the example where three queues have data pending with queue weights 1, 3 and 6 for queues 1, 2 and 3 respectively, the weights would translate to credits of 10%, 30%, and 60% of the bandwidth available during that scheduling round.

The PFS algorithm typically uses a function of rates such as GBR or maximum allowable rates to directly calculate credits each queue receives each scheduling round. For example, if a service is allowed a rate of 768 kilobytes per second, and there are 100 scheduling rounds per second, the service's queue would receive a credit of 7680 bytes per scheduler round. The amount actually allocated to the queue during a scheduler round is debited from the queue's accumulated credit. Credits can be adjusted or accumulated, round-by-round, in an effort to balance the performance requirements of multiple queues. For example, a first queue which has been allocated resources below its minimum GBR specification may have accumulated credits (typically up to some allowable cap) effectively causing its weight to increase in relation to a second queue which has been allocated capacity substantially above its GBR, effectively causing the second queue to accumulate a negative credit, or debit.

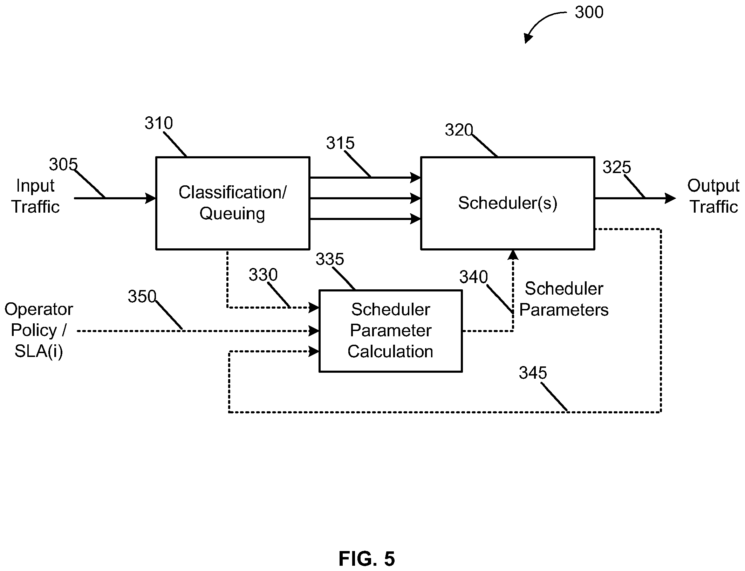

FIG. 5 is a block diagram illustrating a parameterized scheduling module 300 that is used to implement the various parameterized scheduling techniques described above as well as the enhanced parameterized scheduling techniques described below according to an embodiment. The parameterized scheduling system illustrated in FIG. 5 can be implemented to use one or more scheduling groups. In one embodiment, the functionality described with respect to the features of FIG. 5 is implemented by the processor module 281 of FIG. 3.

Input traffic 305 can consist of a heterogeneous set of individual data streams each with unique users, sessions, logical connections, performance requirements, priorities, or policies that enter the scheduling system. Classification and queuing module 310 is configured to assess the relative importance and assigned performance requirements of each packet and to assign the packet to a scheduling group and data queue. According to an embodiment, the classification and queuing module 310 is configured to assess the relative importance and assigned performance requirements of each packet using one of the methods described above, such as 802.1p or Diffserv.

According to an embodiment, the parameterized scheduling system 300 is implemented to use one or more scheduling groups and each scheduling group may have one or more data queues associated with the group. According to an embodiment, each scheduling group can include a different number of queues, and each scheduling group can use different methods for grouping packets into queues, or a combination thereof. A detailed description of the mapping between input traffic, scheduling groups, and data queues is presented below.

According to an embodiment, classification and queuing module 310 outputs one or more data queues 315 and classification information 330 which is received as an input at scheduler parameter calculation module 335. The phrase "outputs one or more data queues" is intended to encompass populating the data queues and does not require actual transmission or transfer of the queues. According to an embodiment, the classification information 330 can include classifier results, packet size, packet quantity, and/or current queue utilization information. Scheduler parameter calculation module 335 is configured to calculate new scheduler parameters (e.g., weights and/or per scheduler round credits) on a per queue basis. Scheduler parameter calculation module 335 can be configured to calculate the new parameters based on a various inputs, including the classification information 330, optional operator policy and service level agreement (SLA) information 350, and optional scheduler feedback information 345 (e.g., stream history received or resource utilization from scheduler module 320). Scheduler parameter calculation module 335 can then output scheduler parameters 340 to one or more scheduler modules 320.

Scheduler module 320 receives the scheduler parameters 340 and the data queues 315 (or accesses the data queues) output by classification and queuing module 310. Data queues as described herein can be implemented in various ways. For example, they can contain the actual data (e.g., packets) or merely pointers or identifiers of the data (packets). Scheduler module 320 uses the updated scheduler parameters 340 to determine the order in which to forward packets (or fragments of packets) from the data queues 315 to output queue 325, for example using one of the methods described above such as PFS, WRR or WFQ. In an embodiment, the output queue 325 is implemented as pointers to the data queues 315. The traffic in the output queue 325 is de-queued and fed to the physical communication layer (or 'PHY') for transmission on a wireless or wireline medium.

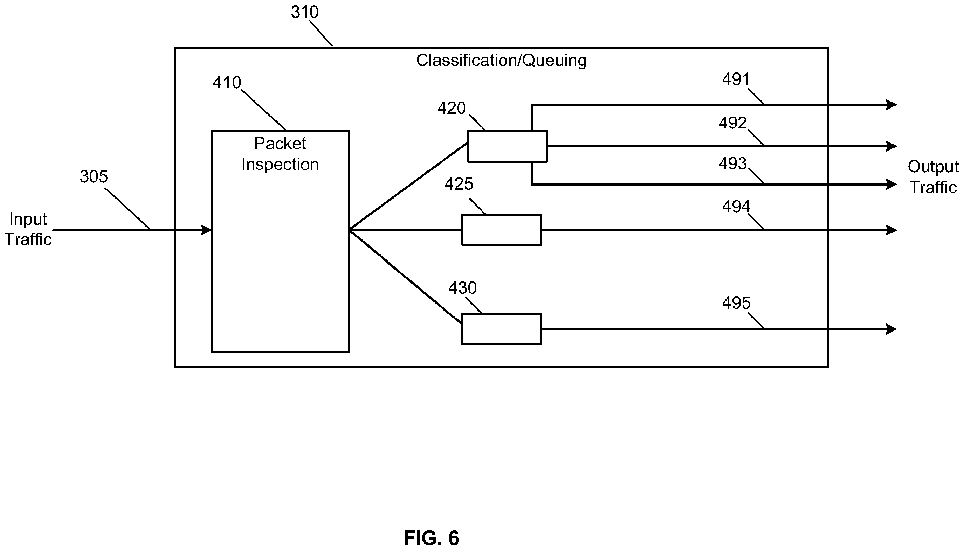

FIG. 6 is a block diagram illustrating the relationship between heterogeneous input traffic and individual queues in a weight-based queuing system. FIG. 6 illustrates the operation of classification and queuing module 310 illustrated in FIG. 5 in greater detail.

Heterogeneous input traffic 305 is input into packet inspection module 410 which characterizes each packet to assess performance requirements and priority as described above. Based upon this information, each packet is assigned one of three scheduling groups 420, 425 and 430. While the embodiment illustrated in FIG. 6 merely includes three scheduling groups, other embodiments may include a greater or lesser number of scheduling groups. The packets can then be assigned to a data queue (491, 492, 493, 494, or 495) associated with one of the scheduling groups. Packets can be assigned to a specific data queue associated with a scheduling group based on performance requirements, priority, additional user specific policy/SLA settings, unique logical connections, or some combination thereof. In one embodiment, the classification and queuing module 310 analyzes packets flowing in two directions, for example, from a client to a server and from the server to the client, and uses information from the packets flowing in one direction to classify the packets flowing in the other direction. The packet inspection module 410 may then receive input traffic from a second direction in addition to the heterogeneous input traffic 305 or may receive information from another inspection module that characterizes packets communicated in the second direction.

In one example, an LTE eNB is configured to assign each QCI to a separate scheduling group (e.g., packets with QCI=9 may be assigned to one scheduling group and packets with QCI=8 assigned to a different scheduling group). Furthermore, packets with QCI=9 may be assigned to individual queues based on user ID, bearer ID, SLA or some combination thereof. For example, each LTE UE may have a default bearer and one or more dedicated bearers. Within the QCI=9 scheduling group, packets from default bearers may be assigned to one queue and packets from dedicated bearers may be assigned a different queue.

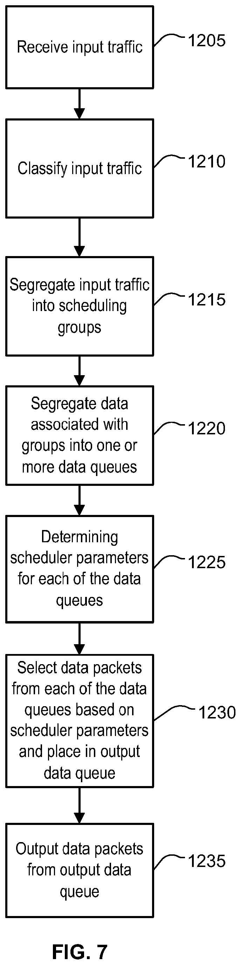

FIG. 7 is a flowchart of a method for queuing data packets to be transmitted across a network medium using a parameterized scheduling technique according to an embodiment. The method illustrated in FIG. 7 may be implemented using the systems illustrated in FIGS. 5, 6, 9, and 10. According to an embodiment, the method illustrated in FIG. 7 is implemented using the various parameterized scheduling techniques described above as well as the enhanced parameterized scheduling techniques described below according to an embodiment.

The method begins with receiving input traffic to be scheduled to be transmitted across a network medium (step 1205). According to an embodiment, the network medium can be a wired or wireless medium. According to an embodiment, the input traffic is input traffic 305 described above. The input traffic can consist of a heterogeneous set of individual data streams each associated with users, sessions, logical links, connections, performance requirements, priorities, or policies. According to an embodiment, classification and queuing module 310 can perform step 1205. According to an embodiment, packet inspection module 410 can perform this assessment step.

The input traffic can then be classified (step 1210). According to an embodiment, classification and queuing module 310 can perform step 1210. In this classification step, the input traffic is assessed to determine relative importance of each packet and to determine if performance requirements have been assigned for each data packet. For example, in an LTE network, a packet gateway can assign packets to specific logical link or bearers. This is indicated by assigning the same tunnel ID to packets for the same logical link (logical channel). The tunnel ID is mapped to an LTE scheduling group (i.e. QCI) when the logical bearer is established. This in turn implies certain performance requirements that are associated with the scheduling group. The tunnel ID may be detected and used to determine performance requirements and scheduling groups and to assign the packet to a queue. Similarly, in WiMAX, a service flow ID may be used for a similar purpose. According to an embodiment, packet inspection module 410 can perform this assessment step. This information can then be used by the classification and queuing module 310 to determine which scheduling groups the data packets should be added.

The input traffic can then be segregated into a plurality of scheduling groups (step 1215). The classification and queuing module 310 can use the information from the classification step to determine a scheduling group into which each data packet should be added. According to an embodiment, packet inspection module 410 of the classification and queuing module 310 can perform this step. According to an embodiment, the relative importance and assigned performance requirements of each packet is assessed using one of the methods described above, such as 802.1p or Diffserv.

The data packets comprising the input traffic can then be inserted into one or more data queues associated with the scheduling groups (step 1220). According to an embodiment, packet inspection module 410 of the classification and queuing module 310 can perform this step.

Scheduler parameters can then be calculated for each of the data queues (step 1225). According to an embodiment, this step is implemented by scheduler parameter calculation module 335. The scheduler parameters for each of the data queues is calculated based on the classification information created in step 1210. The classification information 330 can include classifier results, connection identifiers (e.g., source and destination IP address, TCP port, UDP socket), logical link identifiers (e.g., tunnel ID or bearer ID in LTE, service flow ID or connection ID in WiMAX), packet size, packet quantity, and/or current queue utilization information. The calculation of the scheduler parameters can also take into account other inputs including optional operator policy and service level agreement (SLA) information and optional scheduler feedback information.

Once the data packets have been added to the queues, data packets can be selected from each of the queues based on scheduler parameters (such as weights and credits) associated with those queues and inserted into an output queue (step 1230). The data packets in the output queue can then be de-queued and fed to the physical communication layer (or 'PHY') for transmission on a wireless or wireline medium (step 1235). According to an embodiment, scheduler module 320 can implement steps 1230 and 1235 of this method.

Deficiencies in Some Systems

In WRR, WFQ, PFS or other weight or credit-based algorithms, some systems assign packets to queues and calculate scheduler parameters based on priority, performance requirements, scheduling groups, or some combination

EP 3 541 020 B1

thereof. There are numerous deficiencies in these approaches.

For example, schedulers that consider performance requirements are typically complex to configure, requiring substantial network operator knowledge and skill, and may not be implemented sufficiently to distinguish data streams from differing applications. This leads to the undesirable grouping of both high and low importance data streams in a single queue or scheduling group. Consider, for example, an IEEE 802.16 network. Sometimes it is not possible or not practical to differentiate individual streams as described with reference to FIG. 4 in which case lower layer information can be used. For example, an uplink (UL) data stream (or service flow) may be identified using only a network's gateway IP address (i.e., IP "source address"). In such a case, all data streams "behind" the router, regardless of application or performance requirements are treated the same by the WiMAX UL scheduler policies and parameters.

There are numerous potential deficiencies of a priority-based weight or credit calculation system. The system used to assign priority may not be aware of the user application and in some cases cannot correctly distinguish among multiple data streams being transported to or from a specific user. The priority assignment is static and cannot be adjusted to account for changing network conditions. Priority information can be missing due to misconfiguration of network devices or even stripped due to network operator policy. The number of available priority levels can be limited, for example the IEEE 802.1p standard only allows 8 levels. In addition there can be mismatches due to translation discrepancies from one standard to another as packets are transported across a communication system.

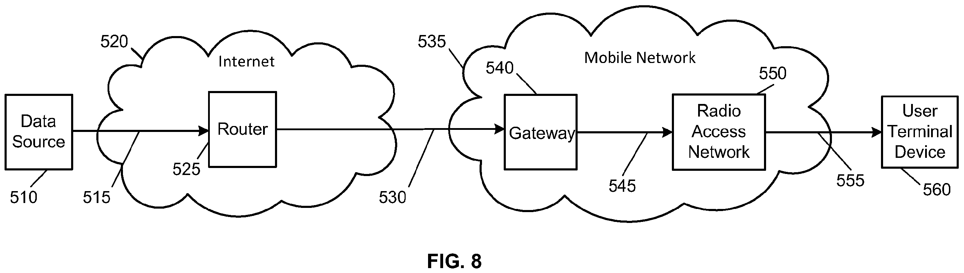

FIG. 8 is a block diagram illustrating a wireless communication system according to an embodiment. In the system illustrated in FIG. 8, a data source 510, such as a VoIP phone, streaming video server, streaming music server, file server, or other devices for P2P applications, is connected to the Internet 520 via communication link 515. Within the Internet 520 there exists one or more network routers 525 configured to direct traffic to the proper packet destination. In this example, Internet traffic is carried along link 530 into a mobile network 535. Traffic passes through a gateway 540 onto link 545 and into the radio access network (RAN) 550. The output of the RAN 550 is typically a wireless, radiofrequency connection 555 linked to a user terminal 560, such as a cell phone.

A discrepancy between two different priority systems can exist in the example illustrated in FIG. 8. For example, a VoIP phone will often be configured to use the IEEE 802.1p or IETF RFC 2474 ("diffserv") packet marking prioritization system to mark packets with an elevated priority level indicating a certain level of desired treatment. In RFC 2474, for example, such priority levels fall into one of three categories: default, assured and expedited. Within the latter two categories, there arc subcategories relating to the desired, relative performance requirements. Packets generated by a data source 510 that is a VoIP phone will thus travel on communication links 515 and 530 with such a priority marking. When the packets arrive at the mobile network gateway 540, these priorities need to be translated into the prioritization system established within the mobile network. For example, in an LTE network, mapping to QCI may be performed. This conversion may create problems. For example, the diffserv information may be completely ignored. Or the diffserv information may be used to assign a QCI level inappropriate for voice service. Additionally, the diffserv information may be used to assign a QCI level that is less fine-grained than the diffserv level, thus assigning the VoIP packets the same QCI level as packets from many other applications.

Some systems have combined the concepts of priority and performance requirements in an effort to provide additional information to the scheduling system. For example, in 802.16 the importance of streams (or "services") is defined by a combination of priority value (based on packet markings such as 802.1p) and performance requirements. While a combined system such as 802.16 can provide the scheduler with a richer set of information, the deficiencies described above still apply.

The use of scheduling groups alone or in conjunction with the aforementioned techniques has numerous deficiencies in relation to end user QoE. For example, the available number of groups is limited in some systems which can prevent the fine-grained control necessary to deliver optimal QoE to each user. Additionally, some systems typically utilize a "best effort" group to describe those queues with the lowest importance. Data streams may fall into such a group because they are truly least important but also because such streams have not been correctly classified (intentionally or unintentionally), through the methods described above, as requiring higher importance.

An example of such a problem is the emergence of 'over-the-top' voice and video services or applications. These services provide capability using servers and services outside of the network operator's visibility and/or control. Data streams from an operator owned or sanctioned source, such as operator provided voice or video, may be differentiated onto different service flows, bearers (logical link), or connections prior to reaching a wireless access node such as a base station. This differentiation often maps to differentiation in scheduling groups and queues. However services, and the resultant data streams, from other sources may all be bundled together onto a default, often best effort, logical link or bearer. For example, Skype and Netflix arc two internet-based services or applications which support voice and video, respectively. Data streams from these applications can be carried by the data service provided by wireless carriers such as Verizon or AT&T, to whom they may appear as non-prioritized data rather than being identified as voice or video. As such, the packets generated by these applications, when transported through the wireless network, may be treated on a 'best-effort' basis with no priority given to them above typical best-effort services such as web browsing, email or social network updates.

9

Some systems implement dynamic adjustment of scheduling weights or credits. For example, in order to meet performance requirements such as guaranteed bit rate (GBR) or maximum latency, scheduling weights may be adjusted upward or scheduling credits may accumulate for a particular data stream as its actual, scheduled throughput drops closer to the guaranteed minimum limit. However, this adjustment of weights or credits does not take into account the effect of QoE on the end user. In the previous example, the increase of weight or accumulation of credits to meet GBR limit may result in no appreciable improvement in QoE, yet create a large reduction in QoE for a competing queue with lower weight per scheduling round credit, or accumulated credit (or debit).

Therefore, there is a need for a system and method to improve the differentiation of treatment of data packets streams from heterogeneous applications grouped into the same scheduling group, such as is common for a 'best effort' scheduling group. Additionally, there is a need to extend the information provided to a parameterized scheduler beyond priority and performance requirements in order to maximize user QoE across a network.

Enhanced Classification Techniques

As described above, communication systems can use classification and queuing methods to differentiate data streams based on performance requirements, priority and logical connections.

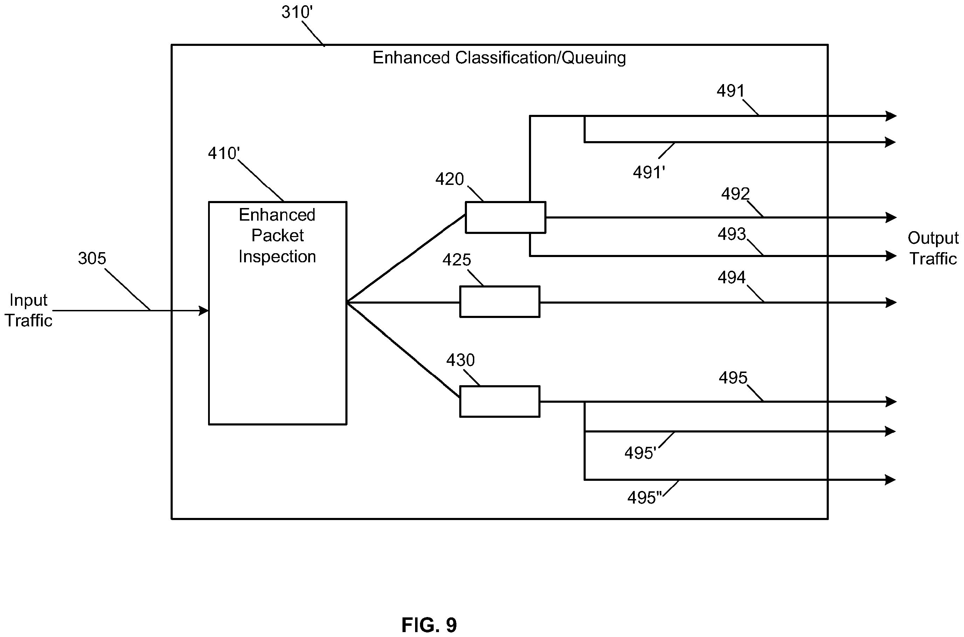

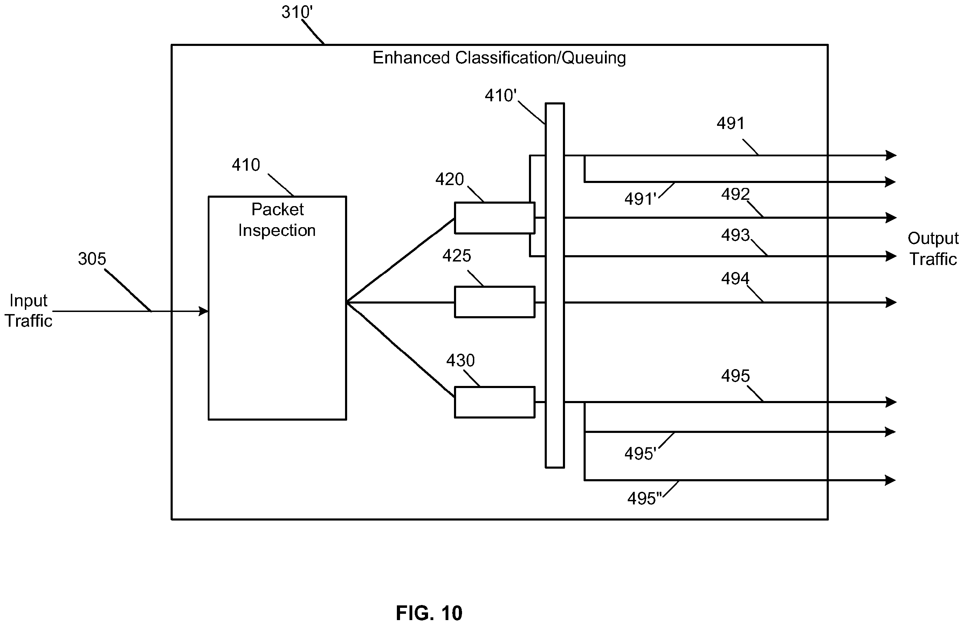

To address previously noted deficiencies in some systems, the classification and queuing module 310 of FIG. 5 can be enhanced to provide an enhanced classification and queuing module 310' (FIGS. 9 and 10). According to an embodiment, the functions illustrated in the parameterized scheduling system 300 illustrated in FIG. 5, which may include the enhanced classification and queuing module 310', can be implemented in a single wireless or wireline network node, such as a base station, an LTE eNB, a UE, a terminal device, a network switch a network router, a gateway, or other network node (e.g., the macro base station 110, pico station 130, enterprise femtocell 140, enterprise gateway 103, residential femtocell 240, and cable modem or DSL modem 203 shown in FIGS. 1 and 2). In other embodiments, the functions illustrated in FIG. 5 can be distributed across multiple network nodes. For example, in an LTE network, enhanced packet inspection could be performed in the EPC Packet Gateway or other core gateway device while the queuing, scheduler parameter calculation module 335 and scheduler module 320 are located in the eNB base station. Other functional partitions are similarly possible. The enhanced classification and queuing module 310' can analyze the application class and/or the specific application of each packet and provide further differentiation of data packet streams grouped together by the traditional classification and queuing methods. Information pertaining to a stream or session's application class or specific application may be communicated via classification information 330 to the scheduler parameter calculation module 335. The enhanced classification may be performed after the traditional classification as a separate step as shown in FIG. 10, or may be merged into the traditional classification step as shown in FIG. 9 providing more detailed classification for use within scheduling groups.

Except as specifically noted, the elements of FIG. 9 operate as described with respect to FIG. 6. However, an enhanced packet inspection module 410' performs the enhanced packet inspection techniques described herein. As shown in FIG. 9, in some embodiments, the enhanced packet inspection module 410' generates additional data queues 491', 495', and 495".

Except as specifically noted, the elements of FIG. 10 operate as described with respect to FIG. 6. In addition to the packet inspection module 410, an enhanced packet inspection module 410' is provided. In one embodiment, the enhanced packet inspection module 410' operates on data packets that have already been classified into different scheduling groups. While illustrated as separate modules, it will be appreciated that the packet inspection module 410 and enhanced the packet inspection module 410' may be implemented as a single module. As shown, in some embodiments, the enhanced packet inspection module 410' generates additional data queues 491', 495', and 495".

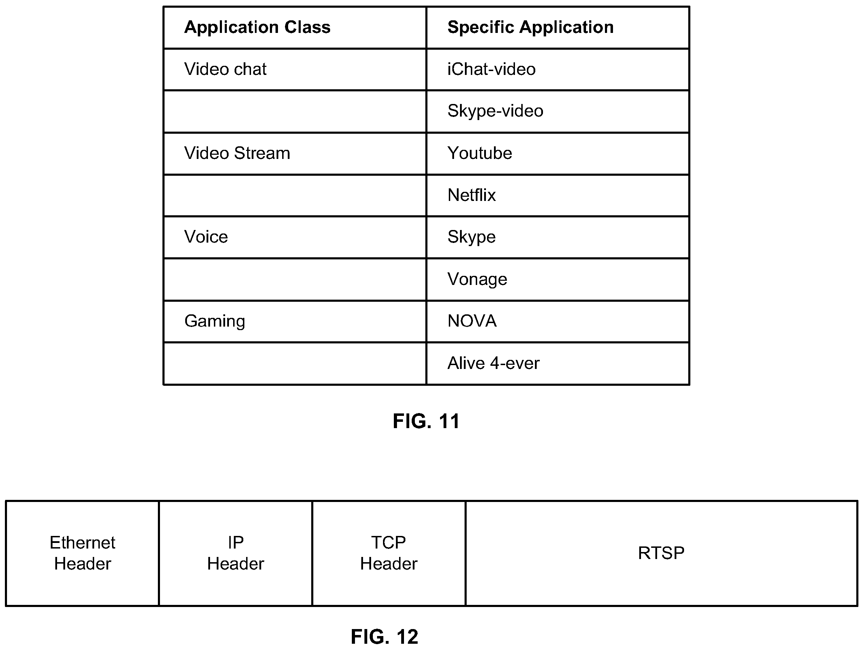

According to an embodiment, the enhanced classification steps disclosed herein can be implemented in the enhanced packet inspection module 410' of the enhanced classification and queuing module 310'. For example, 2-way video conferencing, unidirectional streaming video, online gaming, and voice are examples of some different application classes. Specific applications refer to the actual software used to generate the data stream traveling between source and destination. Some examples include: YouTube, Netflix, Skype, and iChat. Each application class can have numerous, specific applications. The table provided in FIG. 11 illustrates some examples where an application class is mapped to specific applications.

According to an embodiment, the enhanced classification and queuing module 310' can inspect the IP source and destination addresses in order to determine the application class and specific application of the data stream. With the IP source and destination addresses, the enhanced classification and queuing module 310' can perform a reverse domain name system (DNS) lookup or Internet WHOIS query to establish the domain name and/or registered assignees sourcing or receiving the Internet-based traffic. The domain name and/or registered assignee information can then be used to establish both application class and specific application for the data stream based upon a priori knowledge of the domain or assignee's purpose. The application class and specific application information, once derived, can be stored for reuse. For example, if more than one user device accesses Netflix, the enhanced classification and queuing module 310' can be configured to cache the information so that the enhanced classification and queuing module 310' would not need to determine the application class and specific application for subsequent accesses to Netflix by the same user device or another user device on the network.

For example, if traffic with a particular IP address yielded a reverse DNS lookup or WHOIS query which included the name 'Youtube' then this traffic stream could be considered a unidirectional video stream (application class) using the Youtube service (Specific Application). According to an embodiment, a comprehensive mapping between domain names or assignees and application class and specific application can be maintained. In an embodiment, this mapping is periodically updated to ensure that the mapping remains up to date.

According to another embodiment, the enhanced classification and queuing module 310' is configured to inspect the headers, the payload fields, or both of data packets associated with various communications protocols and to map the values contained therein to a particular application class or specific application. For example, according to an embodiment, the enhanced classification and queuing module 310' is configured to inspect the Host field contained in an HTTP header. The Host field typically contains domain or assignee information which, as described in the embodiment above, is used to map the stream to a particular application class or specific application. For example an HTTP header field of "v11.lscache4.c.youtube.com" could be inspected by the Classifier and mapped to Application Class = video stream, Specific Application = Youtube.

According to another embodiment, the enhanced classification and queuing module 310' is configured to inspect the 'Content Type' field within a Hyper Text Transport Protocol (HTTP) packet. The content type field contains information regarding the type of payload, based upon the definitions specified in the Multipurpose Internet Mail Extensions (MIME) format as defined by the Internet Engineering Task Force (IETF). For example, the following MIME formats would indicate either a unicast or broadcast video packet stream: video/mp4, video/quicktime, video/x-ms-wm. In an embodiment, the enhanced classification and queuing module 310' is configured to map an HTTP packet to the video stream application class if the enhanced classification and queuing module 310' detects any of these MIME types within the HTTP packet.

In another embodiment, the enhanced classification and queuing module 310' is configured to inspect a protocol sent in advance of the data stream. For example, the enhanced classification and queuing module 310' may be configured to identify the application class or specific application based on the protocol used to set up or establish a data stream instead of identifying this information using the protocol used to transport the data stream. That is, the enhanced classification and queuing module 310' may identify the application class or specific application by analyzing a stream of control packets rather than the information associated with connection layer 1440. According to an embodiment, the protocol sent in advance of the data stream is used to identify information on application class, specific application, and characteristics that allow the connection for transport of the data stream to be identified once initiated.

For example, in an embodiment, the enhanced classification and queuing module 310' is configured to inspect Real Time Streaming Protocol (RTSP) packets which can be used to establish multimedia streaming sessions. RTSP packets are encapsulated within TCP/IP frames and carried across an IP network, as shown for an Ethernet based system in FIG. 12.

RTSP (H. Schulzrinne, et al., IETF RFC 2326, Real Time Streaming Protocol (RTSP)) establishes and controls the multimedia streaming sessions with client and server exchanging the messages. A RTSP message sent from client to server is a request message. The first line of a request message is a request line. The request line is formed with the following 3 elements: (1) Method; (2) Request-URI; and (3) RTSP-Vcrsion.

RTSP defines methods including OPTIONS, DESCRIBE, ANNOUNCE, SETUP, PLAY, PAUSE, TEARDOWN, GET_PARAMETER, SET PARAMETER, REDIRECT, and RECORD. Below is an example of a message exchange between a client ("C") and a server ("S") using method DESCRIBE. The response message from the server has a message body which is separated from the response message header with one empty line.

```
        C->S: DESCRIBE rtsp://s.companydomain.com:554/dir/f.3gp
RTSP/1.0
            CSeq: 312
            Accept: application/sdp
        S->C: RTSP/1.0 200 OK
            CSeq: 312
            Date: 23 Jan 1997 15:35:06 GMT
            Content-Type: application/sdp
            Content-Length: 376
            v=0
            o=- 2890844526 2890842807 IN IP4 126.16.64.4
            s=SDP Seminar
            c=IN IP4 224.2.17.12/127
            t=2873397496 2873404696
            m=audio 49170 RTP/AVP 0
```

```
m=video 51372 RTP/AVP 31
```

Request-URI in an RTSP message always contains the absolute URI as defined in RFC 2396 (T. Berners-Lee, et al., IETF RFC 2396, "Uniform Resource Identifiers (URI): Generic Syntax"). An absolute URI in an RTSP message contains both the network path and the path of the resource on the server. The following is the absolute URI in the message listed above.

rtsp://s.companydomain.com:554/dir/f.3gp

RTSP-Version indicates which version of the RTSP specification is used in an RTSP message.

In one embodiment, the enhanced classification and queuing module 310' is configured to inspect the absolute URI in the RTSP request message and extract the network path. The network path typically contains domain or assignee information which, as described in the embodiment above, is used to map the stream to a particular application class or specific application. For example, an RTSP absolute URI "rtsp://v4.cache8.c.youtube.com/dir_path/video.3gp" could be inspected by the Classifier and mapped to Application Class = video stream, Specific Application = Youtube. In one embodiment, the enhanced classification and queuing module 310' inspects packets sent from a client to a server to classify related packets sent from the server to the client. For example, information from an RTSP request message sent from the client may be used in classifying responses from the server.

The RTSP protocol may specify the range of playback time for a video session by using the Range parameter signaled using the PLAY function. The request may include a bounded (i.e. - start, stop) range of time or an open-end range of time (i.e. start time only). Time ranges may be indicated using either the normal play time (npt), smpte or clock parameters. Npt time parameters may be expressed in either hours:minutes:seconds.fraction format or in absolute units per ISO 8601 format timestamps. Smpte time values are expressed in hours:minutes:seconds.fraction format. Clock time values are expressed in absolute units per ISO 8601 formatted timestamps. Examples of Range parameter usage are as follows:

Range: npt=1:02:15.3-
Range: npt=1:02:15.3 - 1:07:15.3
Range: smpte=10:07:00-10:07:33:05.01
Range: clock=19961108T142300Z-19961108T143520Z

In one embodiment, the enhanced classification and queuing module 310' is configured to inspect the RTSP messages and extract the Range information from a video stream using the npt, smpte, or clock fields. One skilled in the art would understand that the npt, smpte, and clock parameters within an RTSP packet may use alternate syntaxes in order to communicate the information described above.

The RTSP protocol includes a DESCRIBE function that is used to communicate the details of a multimedia session between Server and Client. This DESCRIBE request is based upon the Session Description Protocol (SDP is defined in RFC 2327 and RFC 4566 which supersedes RFC 2327) which specifies the content and format of the requested information. With SDP, the m-field defines the media type, network port, protocol, and format. For example, consider the following SDP media descriptions:

m=audio 49170 RTP/AVP 0
m=video 51372 RTP/AVP 31

In the first example, an audio stream is described using the Real-Time Protocol (RTP) for data transport on Port 49170 and based on the format described in the RTP Audio Video Profile (AVP) number 0. In the second example, a video stream is described using RTP for data transport on Port 51372 based on RTP Audio Video Profile (AVP) number 31.

In both RTSP examples, the m-fields are sufficient to classify a data stream to a particular application class. Since the m-fields call out communication protocol (RTP) and IP port number, the ensuing data stream(s) can be identified and mapped to the classification information just derived. However, classification to a specific application is not possible with this information alone.

The SDP message returned from the server to the client may include additional fields that can be used to provide additional information on the application class or specific application.

An SDP message contains the payload type of video and audio stream transported in RTP. Some RTP video payload types are defined in RFC 3551 (H. Schulzrinne, et al., IETF RFC 3551, "RTP Profile for Audio and Video Conferences with Minimal Control"). For example, payload type of an MPEG-1 or MPEG-2 elementary video stream is 32, and payload type of an H.263 video stream is 34. However, payload type of some video codecs, such as H.264, is dynamically assigned, and an SDP message includes parameters of the video codec. In one embodiment, the video codec information may be used in classifying video data streams, and treating video streams differently based on video codec characteristics.

An SDP message may also contain attribute "a=framerate:<frame rate>", which is defined in RFC 4566, that indicates the frame rate of the video. An SDP message may also include attribute "a=framesize:<payload type number> <width> <height>", which is defined in 3GPP PSS (3GPP TS 26.234, "Transparent End-to-End Packet-switched Streaming Service, Protocols and Codecs"), may be included in SDP message to indicate the frame size of the video. For historical reasons, some applications may use non-standard attributes such as "a=x-framerate: <frame rate>" or "a=x-dimensions: <width> <height>" to pass similar information as that in "a=framerate:<frame rate>" and "a=framesize:<payload type number> <width> <height>". In one embodiment, the enhanced classification and queuing module 310' is configured to inspect the SDP message and extract either the frame rate or the frame size or both of the video if the corresponding fields are present, and use the frame rate or the frame size or both in providing additional information in mapping the stream to a particular application class or specific applications.

In one embodiment, the enhanced classification and queuing module 310' inspects network packets directly to detect whether these packets flowing between two endpoints contain video data carried using RTP protocol (H. Schulzrinnc, ct al., IETF RFC 3550, "RTP: A Transport Protocol for Real-Time Applications"), and the enhanced classification and queuing module 310' performs this without inspecting the SDP message or any other message that contains the information describing the RTP stream. This may happen, for example, when either the SDP message or any other message containing similar information does not pass through the enhanced classification and queuing module 310', or some implementation of the enhanced classification and queuing module 310' chooses not to inspect such message. An RTP stream is a stream of packets flowing between two endpoints and carrying data using RTP protocol, while an endpoint is defined by a (IP address, port number) pair.

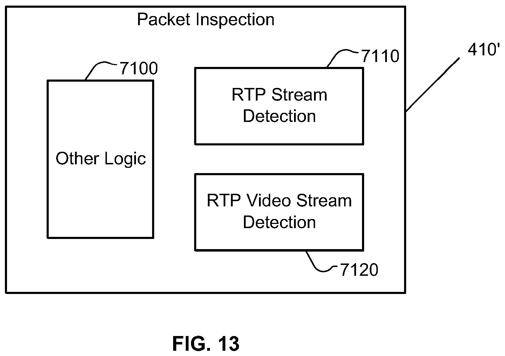

FIG. 13 is a functional block diagram of an embodiment of the enhanced packet inspection module 410'. In this embodiment, the enhanced packet inspection module 410' includes an RTP stream detection module 7110 and a video stream detection module 7120 for detecting whether either UDP or TCP packets contain video data transported using RTP protocol. The enhanced packet inspection module 410' may also implement other functions which are generally represented by an other logic module 7100. In one embodiment, the enhanced packet inspection module 410' receives input traffic flowing in two directions and classifies the packets flowing one direction using information from the packets flowing in the other direction. The enhanced packet inspection module 410' may receive information about the traffic flowing in the other direction from another module rather receiving the traffic itself.

The RTP stream detection module 7110 parses the first several bytes of UDP or TCP payload according to the format of an RTP packet header and checks the values of the RTP header fields to determine whether the stream flowing between two endpoints is an RTP stream.

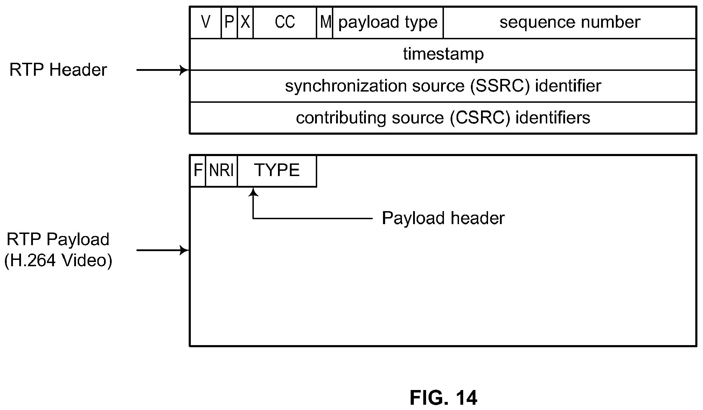

FIG. 14 is a diagram illustrating an example structure of an RTP packet, which includes an RTP header and an RTP payload. In FIG. 14, the RTP payload contains H.264 video data as an example. The RTP header format does not depend on the media type carried in RTP payload, while the RTP payload format is media type specific. If the payload of a UDP or TCP packet contains an RTP packet, the values of several fields in RTP header will have a special pattern. Some of these special patterns are listed below as examples. Refer to FIG. 14 for the short names in parentheses. The RTP stream detection module 7110 may use one of these patterns, a combination of these patterns, or other patterns not listed below in determining whether a stream is an RTP stream.

Field "RTP version" ("V") is always 2.

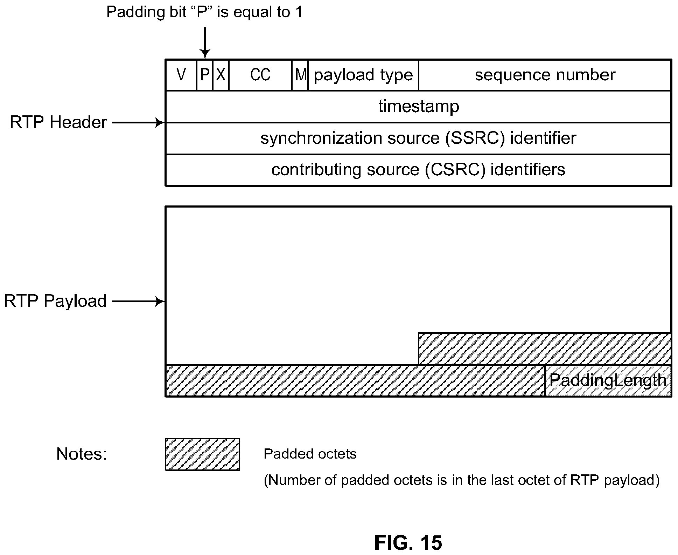

If field "padding bit" ("P") is set to 1, the last octet of the packet is the padding length, which is number of octets padded at the end of the packet. FIG. 15 illustrates such an RTP packet with padded octets at the end of the packet. The padding length must not exceed the total length of RTP payload.

Field "payload type" shall stay constant.

Field "sequence number" should increase by 1 most of time between 2 consecutive packets. Sequence number has a gap when the packets are reordered, or a packet is dropped, or the sequence number rolls over. All of these cases should happen relatively infrequently in normal operation.

Field "timestamp" should have special pattern depending on media type, as detailed below with reference to the video stream detection module 7120.

If a stream is detected to be an RTP stream, the video stream detection module 7120 will perform further inspection on the RTP packet header fields and the RTP payload to detect whether the RTP stream carries video and which video codec generates the video stream.

Payload type of some RTP payloads related to video is defined in RFC 3551. However, for a video codec with dynamically assigned payload type, the codec parameters arc included in an SDP message. However, that SDP message may not be available to the video stream detection module 7120.

If the video stream detection module 7120 detects that payload type is dynamically assigned, it collects statistics regarding the stream. For example, statistics of values of the RTP header field "timestamp," RTP packet size, and RTP packet data rate may be collected. The video stream detection module 7120 may then use one of the collected statistics or a combination of the statistics to determine whether the RTP stream carries video data.

A video stream usually has some well-defined frame rate, such as 24 FPS (frames per second), 25 FPS, 29.97 FPS, 30 FPS, or 60 FPS, etc. In one embodiment, the video stream detection module 7120 detects whether an RTP stream carries video data at least partially based on whether values of the RTP packet timestamp change in integral multiples of a common frame temporal distance (which is the inverse of a common frame rate).

A video stream usually has higher average data rate and larger fluctuation in the instantaneous data rate compared with an audio stream. In another embodiment, the video stream detection module 7120 detects whether an RTP stream carries video data at least partially based on the magnitude of the average RTP data rate and the fluctuation in the instantaneous RTP data rate.

The RTP payload format is media specific. For example, H.264 payload in an RTP packet always starts with a NAL unit header whose structure is defined in RFC 6814 (Y. K. Wang, et al., IETF RFC 6184, "RTP Payload Format for H.264 Video"). In one embodiment, the video stream detection module 7120 detects which video codec generates the video data carried in an RTP stream at least partially based on the pattern of the first several bytes the RTP payload.

Enhanced Queuing

According to an embodiment, the enhanced classification and queuing module 310' can also be configured to implement enhanced queuing techniques. As described above, once enhanced classification has been completed, the enhanced classification and queuing module 310' can assign to an enhanced set of queues based on the additional information derived by the enhanced classification techniques described above. For example, in an embodiment, the packets can be assigned to a set of queues by: application class, specific application, individual data stream, or some combination thereof.

In one embodiment, the enhanced classification and queuing module 310' is configured to use a scheduling group that includes unique queues for each application class. For example, an LTE eNB may assign all QCI=6 packets to a single scheduling group. But with enhanced queuing, packets within QCI=6 which have been classified as Video Chat may be assigned to one queue, while packets classified as Voice may be assigned to a different queue, allowing differentiation in scheduling.

In another alternative embodiment, the enhanced classification and queuing module 310' is configured to use a scheduling group that includes unique queues for each specific application. For example, an LTE eNB implementing enhanced queuing may assign QCI=9 packets classified as containing a Youtube streaming video to one scheduling queue, while assigning packets classified as a Netflix streaming video to a different scheduling queue. Even though they are the same application class, the packets are assigned different queues in this embodiment because they are different specific applications.

In yet another embodiment, the enhanced classification and queuing module 310 is configured such that a scheduling group may consist of unique queues for each data stream. For example an LTE eNB may assign all QCI=9 packets to a single scheduling group. Based on enhanced classification methods described above, each data stream is assigned a unique queue. For example, consider an example embodiment with a scheduling group servicing five mobile phone users, each running two specific applications. In one embodiment, if the applications for each mobile device arc mapped to the default radio bearer for the mobile this would result in five queues, one for each mobile, carrying heterogeneous data using the original classification and queuing module. However, in one embodiment, ten queues are created by the enhanced classification and queuing module 310 in support of the ten data streams. In an alternative example, each of the five mobiles has two data streams which use the same specific application. In this case, the data streams are also classified based on, for example, port number or session ID into separate queues resulting in ten queues.

The enhanced categorization and queuing techniques described above can be used to improve the queuing in a wireless or wired network communication system. The techniques disclosed herein can be combined with other methods for assigning packets to queues to provide improved queuing.

Application Factor

According to an embodiment, the scheduler parameter calculation module 335 is configured to use enhanced policy information when calculating scheduler parameters to address QoE deficiencies of some weight or credit calculation techniques described above. According to an embodiment, the enhanced policy information 350 can include the assignment of a quantitative level of importance and relative priority based upon application class and specific application. This factor is referred to herein as the application factor (AF) and the purpose of the AF is to provide the operator with a means to adjust the relative importance, and ultimately the scheduling parameters, of queues following enhanced classification and enhanced queuing. In another embodiment, AFs are established through the use of internal algorithms or defaults, requiring no operator involvement.

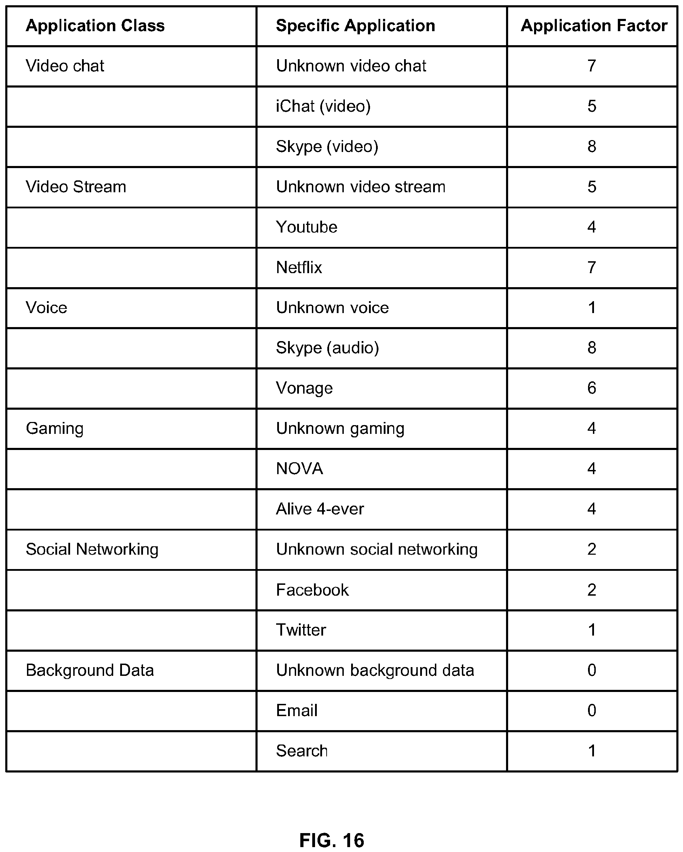

FIG. 16 is a table illustrating sample AF assignments on per application class and per specific application basis according to an embodiment. In cases where it is not possible to identify the specific application carried by a packet or data stream, an AF assignment can be made to an 'unknown' category within the application class. To optimize QoE for throughput and latency sensitive applications, video and voice applications have been assigned higher AF values (all but one is 6 or higher) over background data and social network traffic (AF in the range of 0-2).

Within the video chat class, the operator may discover that one video chat service (e.g., iChat) is substantially more burdensome (e.g., requires more capacity, has less latency or jitter tolerance) than another (e.g., Skype video), and can attempt to encourage the use of the more network friendly application by assigning a higher AF value to the Skype video chat than to iChat (8 versus 5).

Similarly, the operator may decide to preserve the QoE of a paid service, such as Netflix, at the expense of what may be considered the less important need to view short, free services, such as YouTube videos by adjusting the AF associated with these services. The operator may desire the ability to enhance certain voice services (e.g., Skype audio, Vonage) who have engaged strategically with the Operator with a high AF (8 and 6, respectively) while assigning all remaining (i.e. non-strategic ) voice services a very low AF of 1.

One of ordinary skill in the art would understand that different AF values could be used to create different and varying weight or credit relationships between the application classes and specific applications. One skilled in the art would also understand how additional application classes and specific applications beyond those shown in FIG. 16 could be added.

Additionally, one of ordinary skill in the art would understand that AFs may be assigned differently based upon node type and/or node location. For example, an LTE eNB serving a suburban, residential area may be configured to use one set of AFs while an LTE eNB serving a freeway may be configured use a different set of AFs.

Scheduling Parameters

According to an embodiment, enhanced scheduler parameter calculation module 335 can also be configured to implement enhanced techniques for determining weighting or credit factors. As described above, some weight or credit calculation algorithms can adjust scheduling parameters for individual queues based on various inputs. For example, in the parameterized scheduling module illustrated in FIG. 5, the scheduler parameter calculation module 335 can be configured to calculate the new scheduler parameters based on a various inputs, including the classification information 330, optional operator policy and SLA information 350, and optional scheduler feedback information 345 (e.g., stream history received from scheduler module 320).

According to an embodiment, an enhanced scheduler parameter calculation module 335 can use additional weight and credit calculation factors to improve QoE performance. For example, in an embodiment, an additional weight factor can be used to generate an enhanced weight (W') as shown below:

$$W'(q) = a*W(q) + b*AF(q)$$

where:

W' = enhanced queue weight
q= the queue index
W= the queue weight derived by conventional weight calculations
a= coefficient mapping W to W'
AF = the Application Factor
b = coefficient mapping AF to W'

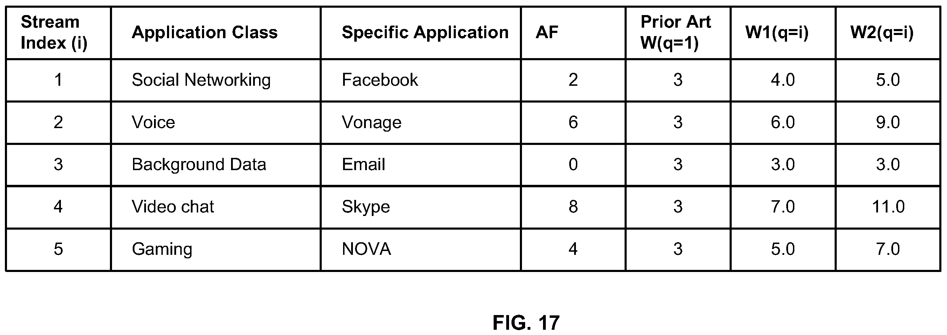

For example, in an embodiment, an LTE eNB base station with 5 active streams (designated by a stream index i) within a single queue, best effort scheduling group (e.g., QCI = 9 in LTE), is shown in FIG. 17. Due to the deficiencies described in the conventional techniques, there are numerous application classes and specific applications assigned to a single queue in this scheduling group. In this example, all packets are assigned to the same queue resulting in no differentiation between application class and/or specific application by the scheduler.

For example, stream #1, a Facebook request, and stream #4, a Skype video chat session, are both assigned to the same queue. Because packets from both streams are in the same queue, both streams must share the resources provided by the scheduler in a non-differentiated manner. For example, packets may be serviced in a FIFO method from the single queue thereby creating a "first to arrive" servicing of packets from both streams. This is undesirable during times of network congestion, due to the fact that a video chat session is more sensitive, in terms of user QoE, to packet delay or discard than a Facebook update.

In contrast, if the enhanced weight calculation technique described above (which can be implemented in enhanced scheduler parameter calculation module 335) are applied, each of the five streams (designated by index i in FIG. 17) can be assigned to unique queues (designated by index q in FIG. 17). Each queue may then be assigned unique, enhanced weights as a function of application class and specific application. For example, the columns W1 and W2 in FIG. 17 demonstrate the results of enhanced queue weight calculations based on the application class, specific application and AF shown in FIG. 16, assuming each data stream i is assigned to a unique queue, q.

Weights W1 and W2 are calculated for each stream using the equation for W' (described above) with coefficient 'a' set to 1, and coefficient 'b' set to 0.5 and 1, respectively. That is:

$$W1(q) = W(q) + 0.5*AF(q)$$

$$W2(q) = W(q) + AF(q)$$

The effect of the calculation can be seen by again comparing data stream #1 with stream #4. For W1, the video chat stream has a weight of 7 which is now larger than the Facebook stream weight of 4. As coefficient 'b' is increased to 1.0 in the calculations of W2, the difference in weight between stream #4 and #1 increases further (11 and 5, respectively).

For cases W1 and W2, the Skype stream will be allocated more resources than the Facebook stream. This increases the likelihood that the Skype session will be favored by the scheduler and can improve session performance and QoE during times of network congestion. While this comes at the expense of the Facebook session, the tradeoff is asymmetrical: packet delay/discard will have a smaller effect (i.e. less noticeable) on the Facebook session as compared to the equivalent packet treatment for a video chat session. Therefore the application-aware scheduling system has provided a more optimal response with respect to end-user QoE.

In an alternative example, each data stream in FIG. 17 is for a different mobile and may already be in separate queues within the scheduling group for QCI 9. In some systems the weight assigned to each queue would not consider specific application or application class. However, as described herein, in some embodiments, the weights are differentiated.

Similarly, an enhanced per scheduling round credit could be calculated for credit-based scheduling algorithms using the formula $C'(q) = a*C(q) + b*AF(q)$, where C (for credit) replaces the W (for weight) in the enhanced weight calculation formula. This enhanced credit would be added to the queue's accumulated credit (possibly capped) each scheduling round while allocated bandwidth would be debited from the accumulated credit. The AF is used in the same manner for both credit and weight based calculations, although the scale of AF may differ in the credit-based equation relative to the weight-based equation due to the typical difference in scale between weights and data rates when used in scheduling algorithms.

One of ordinary skill in the art would also recognize that the systems and methods described above may be extended to cases for which a queue contains packets from more than one data stream, more than one specific application, more than one application class, or combinations thereof for which an aggregate scheduling may be appropriate. For example, an enhanced weight or credit may be assigned to a queue containing three Skype/Video Chat data streams generated by three different mobile phones. Additionally, the systems and methods described above may be applied to all or only a subset of queues in one or more scheduling groups. For example, enhanced parameter calculation and enhanced queuing may be applied to an LTE QCI=9 scheduling group but known parameter calculation may be applied to LTE QCI=1-8 scheduling groups. Furthermore, the mapping of coefficients 'a' and 'b' may be adjusted as a function of scheduling group or alternative grouping of queues. For example, coefficient 'b' may be set to 1 for a scheduling group containing LTE QCI=9 queues but set to 0.5 for LTE QCI=8 queues.

Time-Varying Application Factor

According to an embodiment, the enhanced scheduler parameter calculation module 335 can also be configured to extend the application factor (AF) from a constant to one or more time-varying functions, AF(t). According to some embodiments, the AF is adjusted based upon a preset schedule. An operator may desire a particular treatment of applications at one time during the day and a differing treatment during other times.

For example, in one embodiment, the enhanced scheduler parameter calculation module 335 is configured to use "rush hour" AF values during typical commute times where voice calls arc the predominant application running on a mobile network, especially for those cells and sectors serving transportation routes. For such times, (e.g., Monday through Friday, 7am to 9am and 4pm to 7pm) all voice applications are assigned an AF=10 improving the level of service above all other applications (referencing FIG. 16). Outside of those time periods, the enhanced scheduler parameter calculation module 335 is configured to revert to the regular AF values.

In another example, the enhanced scheduler parameter calculation module 335 is configured to use larger AF values with over-the-top (OTT) video services during periods where such services are most likely to be used. For example, the enhanced scheduler parameter calculation module 335 is configured to use larger AF values during evenings on weekends, especially for networks that service residential areas. Referring once again to FIG. 16, the peak settings for OTT video could include, for example, setting video stream applications (e.g., unknown video stream and Netflix) to an AF=10 between 7-11pm on Friday and Saturday.

The overall quantity of data for a particular application class or specific application can be used in the calculation and assignment of AFs. For example, if all data were from the same specific application, there may be no need to adjust AFs since all streams would warrant the equivalent user experience (however, even then characteristics, such as frames per second or data rate per stream, could still be used to modify AFs as described below). If there was very little data requiring a high quality of user experience, for example only one active Netflix session with all other data being email, the AF of the Netflix stream may be increased much more than would normally be the case to ensure the best quality of experience (for example, fewest lost packets) possible, knowing all or most other data is delay tolerant and may have built-in retransmission mechanisms. In an alternative embodiment, the AF is calculated as a function of the percentage of total available bandwidth required by homogenous or similar data streams. For example, Netflix streams could start with a high AF, but as a higher percentage of data usage is consumed by Netflix, the AF for all Netflix streams may decrease, or the AF for new Netflix streams may decrease leaving existing Netflix streams' AFs unchanged.

One of ordinary skill in the art would recognize that periodic, schedule based AF adjustments can be based on any recurring period including, but not limited to, time of day, day of week, tide, season and holidays. Furthermore, in an embodiment, the enhanced scheduler parameter calculation module 335 is configured to use non-recurring scheduling to adjust the AF in response to local sporting, business and community activities or other one-time scheduled events. According to some embodiments, the AF values can be manually configured by a network operator for non-recurring scheduling. According to other embodiments, the enhanced scheduler parameter calculation module 335 is configured to access event information stored on the network (or in some embodiments pushed to the network node on which the enhanced scheduler parameter calculation module 335 is implemented) and the enhanced scheduler parameter calculation module 335 can automatically update the AF values according to the type of event. According to an embodiment, the enhanced scheduler parameter calculation module 335 can also be configured to update the AF values in real-time to accommodate unforeseen events including changing weather patterns, natural or other disasters or law enforcement/military activity.

### Application Factor with Dependency on Application Characteristics

According to an embodiment, the enhanced scheduler parameter calculation module 335 can be configured to extend the application factor (AF) from a function of application class and specific application to also depend on application characteristics. According to some embodiments, the AF is further adjusted based upon video frame size, video frame rate, video stream data rate, duration of the video stream, amount of data transferred with respect to the total amount of video stream data, video codec type, or a combination of any of these video application characteristics.

In an embodiment, the optimization criterion is to increase the number of satisfied users. Based on this criterion, the AF of a video data stream is adjusted by an amount inversely proportional to the data rate of the video stream. A lower AF may result in more packets being dropped during periods of congestion than would be dropped using a higher AF. For the similar amount of quality degradation, lowering the AF of a video stream of higher data rate may free up more network bandwidth than lowering the AF of a video stream of lower data rate. During the period of congestion, it is preferred to lower the AF of a video stream of higher data rate first, so the number of satisfied users can be maximized.

In an embodiment, the optimization criterion is to minimize perceivable video artifacts caused by imperfect packet transfer. Under this criterion, the AF of a video stream is adjusted by an amount proportional to the frame size, but inversely proportional to frame rate. For example, a lower AF may result in more frames being dropped during periods of congestion than would be dropped when using a higher AF. An individual frame of a video stream operating at 60 frames per second is a smaller percentage of the data over a given time period than an individual frame of a video stream operating at 30 frames per second. Since the loss of a frame in a video stream operating at 60 frames per second would be less noticeable than the loss of a frame in a video stream operating at 30 frames per second, the stream operating at 30 frames per second may be given a higher AF than the stream operating at 60 frames per second.

In an embodiment, the AF of a data stream may be adjusted dynamically by an amount proportional to the percentage of data remaining to be transferred. For example, a lower AF may be assigned to a data stream if the data transfer is just started. For another example, a higher AF may be assigned to a data stream if the transfer of entire data stream is about to complete.

In an embodiment, the AF of a video data stream is adjusted by a value dependent on the video codec type detected. A lower AF may be assigned to a video codec which is more robust to packet loss. For example, an SVC (H.264 Scalable Video Coding extension) video stream may be assigned a lower AF than a non-SVC H.264 video stream.

In an embodiment, the AF of a video data stream is adjusted based upon the duration of the video data stream, the amount of time remaining in the video data stream, or a combination thereof. For example, an operator may decide to assign a higher AF to a full-length Netflix movie as compared to a short 10 second Youtube clip, since the customer may have a higher expectation of quality for a feature length film as compared to a brief video clip. In another example, the operator may decide to dynamically assign a higher AF to a video data stream that is nearing completion as compared to one that is just starting in order to leave the customer who has finished viewing a video data stream with the best possible impression (see Recency Effect described below).

Information describing the duration of a video data stream may be obtained using the enhanced classification methods described above, including the Range information indicated during an RTSP message exchange. Information on the amount of time remaining in the video data stream may be calculated, for example, by subtracting the current video playback time from the stop time indicated in the Range information. Current video playback time may also be obtained by inspection of individual video frames or by maintaining a free-running clock which is reset at the beginning of playback. One skilled in the art would understand there may be alternate methods to obtain current video playback time.

In an embodiment, the AF of a video data stream is adjusted based upon the specific client device or device class used to display the video data stream. Device classes may include cell phones, smart phones, tablets, laptops, PCs, televisions, or other devices used to display a video data stream. Device classes may be further broken into subclasses to include specific capabilities. For example, a smart phone with WiFi capability may be treated differently than a smart phone without WiFi capability.

The specific device may refer to the manufacturer, model number, configuration, or some combination thereof. An Apple iPhone 4 (smart phone) or Motorola Xoom (tablet) are examples of a specific device.

The client device class, subclass, or specific device may be derived using various methods. In an embodiment, the device class may be derived using video frame size as described above. For example, the HTC Thunderbolt smart phone uses a screen resolution of 800 pixels by 480 pixels. The enhanced packet inspection module 410' can detect or estimate this value using methods described above and determine the device class based upon a priori knowledge regarding the range of screen resolutions used by each device class or specific device.

In an embodiment, information regarding the device class, subclass or specific device is signaled between the client device and an entity in the network. For example, in a wireless network 100, a client device 150 may send information describing the vendor and model to the core network 102 when the client device initially joins the network. This information may be learned, for example, by the enhanced packet inspection module 410' of a base station 110 for use at a later time.

Once learned, the device class, subclass, or specific device may be used to adjust the AF based upon operator settings. For example, in FIG. 16, the AF for Netflix (a specific application) may be raised from 7 to 9 if the device class is determined to be a large screen television where the expectation for high quality playback is deemed critical.

In an embodiment, AF may be further modified by one or more service levels communicated via operator policy / SLA 350. For example, an operator may sell a mobile Netflix package in which customers pay additional fees in support of improved video experiences (e.g., quality, quantity, access) on their mobile phones. For customers participating in this program, the operator may assign an increased AF for the video stream application class shown in FIG. 16. For example, Netflix AF may be increased from 7 to 9, Youtube AF may be increased from 4 to 7, and the unknown video stream category AF may be increased from 5 to 7. Additionally, SLAs may be used to differentiate customers, governing whether a particular customer's data is eligible to receive preferential treatment via AF modification. One skilled in the art would recognize that adjusting AF as a function of service levels may or may not be used in conjunction with device class, subclass or specific device.

In addition to selling retail services directly to the end user, a network operator may additionally or alternatively sell network capacity on a wholesale basis to a second operator (termed a virtual network operator or VNO) who may then sell retail services to the end user. For example, mobile network operator X may build and maintain a wireless network and decide to sell some portion of the network capacity to operator Y. Operator Y may then create a retail service offering to the general public which, possibly unbeknownst to the end user, uses operator X capacity to provide services.

In an embodiment, AF may be further modified by the existence of a VNO who may be using capacity on a network. For example, an operator X may have two VNO customers: Y and Z, each with differing service agreements. If operator X has agreed to provide VNO Y with better service than VNO Z, then data streams associated with VNO Y customers may be assigned a higher AF than streams associated with VNO Z customers, for a given device class, application class and specific application. In another example, operator X may sell retail services directly to end users and contract to sell services to VNO Y. In this case, the operator X may choose to provide its customers higher service levels by assigning a larger AF to streams associated with its customers as compared to those associated with VNO Y customers. Enhanced classification methods may be used to identify traffic associated with different VNO customers, including, for example, inspection of IP gateway addresses, VLAN IDs, MPLS tags or some combination thereof. One skilled in the art would recognize that other methods may exist to segregate traffic between VNO customers and the operator.

Duration Neglect and Recency Effects

A further method to enhance the weight function extends the mapping coefficient, b, to a time varying function, assigned on a per queue basis. That is, b is a function of both time (t) and queue (q), b(q,t). In one embodiment, b(q,t) is adjusted in real-time, in response to, or in advance of, scheduler decisions for streams carrying video data streams (streaming or two-way) each on unique queues. This embodiment can further reduce peak load with minimal QoE loss by taking advantage of both the recency effect (RE) and duration neglect (DN) concepts as described by Aldridge et al. and Hands ct al. See Aldridge, R.; Davidoff, J.; Ghanbari, M.; Hands, D.; Pearson, D., "Recency effect in the subjective assessment of digitally-coded television pictures," Image Processing and its Applications, 1995., Fifth International Conference on , vol., no., pp. 336-339, 4-6 July 1995, and Hands, D.S.; Avons, S. E., "Recency and duration neglect in subjective assessment of television picture quality," Journal of Applied Cognitive Psychology, vol. 15, no. 6, pp. 639-657, 2001.

The concept of DN is that the duration of an impairment viewed during video playback is less important than its severity. Thus for video being transported across a multiuser, capacity constrained network, it may be preferred (from a QoE perspective) for a scheduler which has already dropped one or more video packets from a video stream to continue to drop packets from that stream, rather than choose to drop packets from an alternate video stream, so long as the packet loss rate docs not exceed a preset threshold. For example, based on the DN concept, discarding 5% of the packets of a single video stream over 10 seconds provides improved network QoE as compared to discarding 5% of the packets for 2 seconds, for each of 5 different video streams.

The concept of RE is that viewers of a video playback tend to forget video impairments after a certain amount of time and therefore judge video quality based on the most recent period of viewing. For example, a viewer may subjectively judge a video playback to be "poor" if the video had frozen (i.e. stopped playback) for a period of 2 seconds within the last 15 seconds of a video clip and judge playback to be "average" if the same 2 second impairment occurred 1 minute from the end of the video clip.

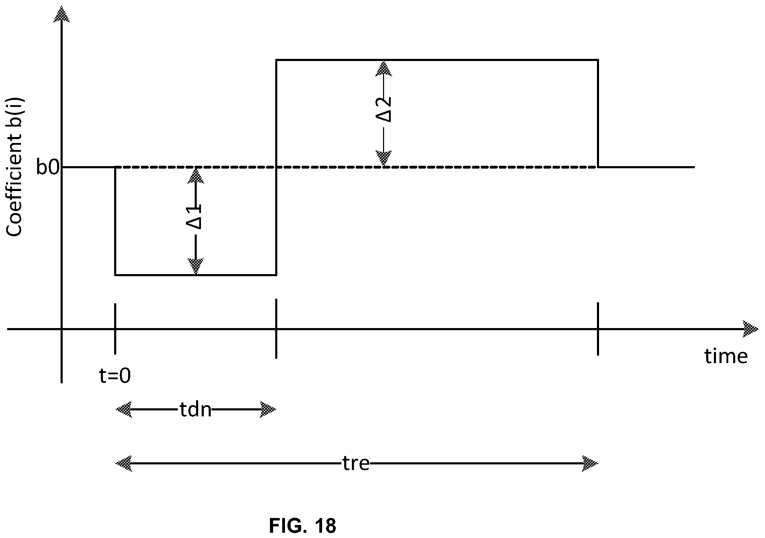

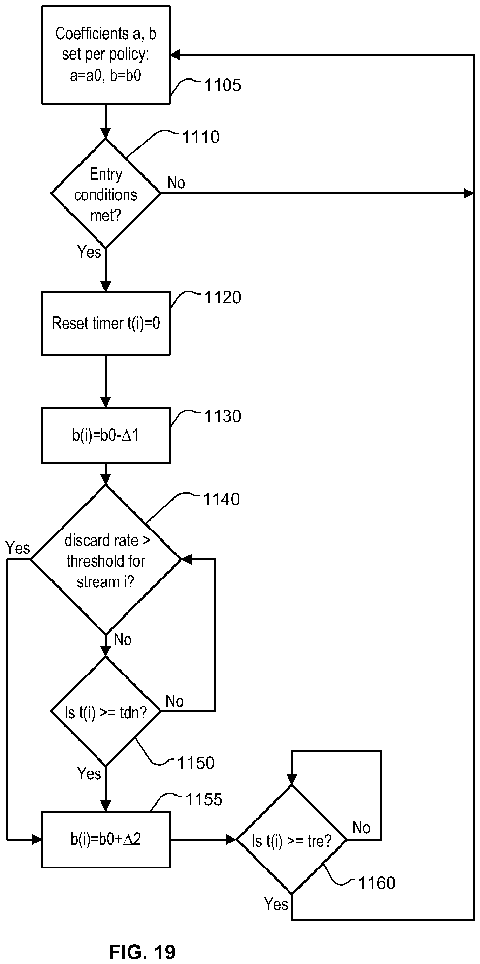

To this end, the coefficient 'b' of the enhanced weight equation ($W'(q) = a*W(q) + b*AF(q)$) or the enhanced credit equation ($C'(q) = a*C(q) + b*AF(q)$) is managed, on a per queue (and in this case a per data stream) basis, using the timing diagram shown in FIG. 18 and the method illustrated in FIG. 19. Per the concept of DN, a video stream that has undergone packet loss can "tolerate" additional, modest packet loss (or some other evaluation metric) without a substantial degradation of user QoE. This extension of degradation relieves some, potentially all, of the network congestion and thus benefits the remaining user streams which can be serviced without degradation. Following a period of degradation, a video stream is serviced with increased performance for a period of time, per the concept of RE.

As shown in FIG. 18, during the period of intentional degradation, the value of b(i) is adjusted from its nominal value of b0 downward by an amount $\Delta 1$, for a period of tdn. This is followed by a period of enhancement in which b(i) is increased by $\Delta 2$ above b0 ($\Delta 2$ could be 0). This enhancement period lasts for the remainder of the period tre after which the coefficient b(i) returns to its normal value =b0.

FIG. 19 illustrates a method for assigning weights or credits to queues in a scheduling system according to an embodiment. In an embodiment, the method illustrated in FIG. 19 is implemented in scheduler parameter calculation module 335.

The method illustrated in FIG. 19, begins with coefficients a and b of the enhanced weight or credit equation being set per policy to a0 and b0, respectively (step 1105). One or more algorithm entry conditions are then evaluated (step 1110). In one embodiment, the algorithm entry condition is a signal from the scheduler that video stream i must initiate the algorithm due to current or predicted levels of congestion in the network. In an alternative embodiment, the entry condition is based on detection of one or more dropped or delayed packets by the scheduler from video stream i. One of ordinary skill in the art will recognize that additional entry conditions can be created using various combinations of scheduler and classifier information. One of ordinary skill in the art will further recognize that entry conditions can be based upon meeting one or more criteria be based on various forms of information including triggers, alarms, thresholds, or other methods.

Once the entry condition or conditions have been met, a two-stage timing algorithm is initiated. A stream time is reset to zero (step 1120) and the value of b(i) is reduced by an amount $\Delta 1$ (step 1130).

A determination is then made whether the current frame discard rate exceeds a threshold for stream i (step 1140). For example, in an embodiment, the threshold is set to 5% over a 1 second period. In other embodiments, a different threshold can be set up for the stream based on the desired performance characteristics for that stream.

If the frame discard rate for the stream exceeds the threshold, the intentional degradation phase is terminated and the method continues with step 1155. Otherwise, if the frame discard rate does not exceed the threshold, a determination is made whether the timer has reached tdn. If the timer has reached or passed tdn, the intentional degradation phase is terminated and method continues with step 1155. Otherwise, if tdn has not been reached, the method returns to step 1140 where the determination is again made whether the current frame discard rate exceeds a threshold for stream i.

The coefficient b(i) is set to a value of b0+Δ2 (step 1155) before the timer is once again checked. A determination is then made whether the timer has reached tre (step 1160). If tre has not yet been reached, the method returns to step 1160. Otherwise, if the timer has reached tre, the method returns to step 1105.

According to an alternative embodiment, iteration through step 1160 can gradually adjust Δ2 towards zero over time period tre. According to another alternative embodiment, alternative (or additional) metrics such as packet latency, jitter, a predicted video quality score (such as VMOS) or some combination thereof is evaluated in step 1140. In a further embodiment, step 1140 is adjusted so that if the evaluation metric exceeds the threshold, the value Δ1 is reduced by an amount Δ3 with control then passing to step 1150 (rather than to step 1155).

In some systems, data identified as coming from two applications with different scheduling needs may be difficult to separate into separate queues for application of differing AFs, for example, for queues 491 and 491' in FIG. 9. Instead the data for both applications would remain in the same queue 491 as shown in FIG. 6. This may happen, for example, in an LTE system where the data from two different applications may be mapped by the core network onto the same data bearer. From the point of view of both the core network equipment (for example, Mobility Management Entity (MME), Serving Gateway, and Packet Gateway) and the UE, the data bearer is indivisible and has a bearer ID which may be included in the header of each packet as it is transmitted over the air. Additionally, if the bearer is operating in acknowledged mode (AM), the packets belonging to a bearer are tagged with sequence numbers. Separating the data from the two applications into different scheduling queues for application of different AFs may cause them to arrive at the UE out of order. This can cause the UE to lose synchronization with the stream. Delayed packets may be assumed lost, generating unnecessary retransmission requests. Sequence numbers may also be used, in part, for ciphering and deciphering packets. Out of order packets can cause loss of synchronization in the ciphering/deciphering process resulting in failure of that process. It can also affect the efficiency of header compression algorithms if sequence numbers are out of order, decreasing the benefit of one of the compression mechanisms.

These problems can be overcome in various ways. In one embodiment, the data is split into separate queues 491 and 491' which can be given different AFs. In this case, it is preferential to apply sequence numbers, ciphering, and header compression on the egress of the queues so that the data appears to have been pulled from a single queue with the scheduling order appearing to be the receipt order. This, however, is computationally complex and the order of processing, especially ciphering, may cause severe demand for computational resources. In another embodiment, rather than splitting queue 491 into queues 491 and 491', the AF for queue 491 can be determined based on the combination of applications classes or specific applications currently carried on the data bearer rather than an individual application class or specific application. For example, if video data is detected on the logical link or bearer it may have an AF that is modified to reflect the QoE requirements of video even though the bearer may also have a background application that is periodically checking for email updates. When the use of video subsides, the AF may be returned to a value more appropriate for best effort data traffic. This is computationally less complex and achieves a similar result in cases such as streaming video when an application with demanding requirements is active most other data, if any, on the same bearer will be low in bandwidth relative to the demanding application. That is to say, the user will be concentrating on the video, voice, gaming, video conferencing, or other high bandwidth application while it is in use. To additionally guard against situations where the application with generally more demanding performance is not the bulk of the data on a bearer, for example playing a low bit rate YouTube video while email is downloading a very large attachment, the application factor can be a function of the percentage of traffic on the bearer from an application class or specific application rather than merely the presence of the application class or specific application.

The enhanced weight equation, W'(q) = a*W(q) + b*AF(q), and the enhanced credit equation, C'(q) = a*C(q) + b*AF(q), may be further modified to also include the effects of additional factors such as the current state of the queues, the current state of the communication link, and additional characteristics of the data streams. This may result in equations of the form:

$$W''(q) = a*W(q) + b*AF(q) + c1*F1(q) + c2*F2(q) + \ldots,$$

and

$$C''(q) = a*C(q) + b*AF(q) + c1*F1(q) + c2*F2(q) + \ldots,$$

where W" is the modified weight and C" is the modified credit, F1 and F2 arc additional weight or credit factors, and c1 and c2 are coefficients for mapping the additional factors to the modified weight or the modified credit.

Adjusting the weights or credits using multiplicative additional factors rather than additive additional factors, or a combination of additive and multiplicative additional factors (e.g., W"(q) = a*W(q) + b*AF(q)*c1*F1(q) + c2*F2(q) + ...) is possible, allowing scaling of weight or credit changes.

In an embodiment, a queue's weights or credits may be adjusted based upon queue depth. If a queue serving, for example, a video or VoIP stream reaches x% of its capacity, weights or credits may be dynamically increased by an additional factor until the queue falls below x% full, at which point the increase is no longer applied. The additional factor may be in itself application specific, for example with a different additional factor being applied for video than for voice, or may be dependent on the data rate of the service. In some embodiments, hysteresis is provided by including a delta between the buffer occupancy levels at which weight and credit increases begin and end. Additionally, when the queue is x'% full, where x' > x, weights or credits may be further increased. In a further embodiment, a queue's weights or credits may be adjusted in part or in whole by a factor proportional to queue depth. These techniques allow additional factors to be applied to an individual stream in addition to or instead of an application factor (AF).

In another embodiment, a queue's weights or credits may be adjusted based upon packet discard rate. If a queue serving, for example, a video or VoIP stream exceeds capacity and packets are discarded, the discard rate is monitored. If the discard rate exceeds a threshold, weights or credits may be dynamically increased by an additional factor until the discard ceases or falls below the prescribed acceptable level, at which point the increase is no longer applied. The additional factor may be in itself application specific, for example with a different additional factor being applied for video than for voice, or may be dependent on the data rate of the service. In some embodiments, hysteresis is provided by including a delta between the discard rates at which weight and credit increases begin and end. Additionally, when the discard rate exceeds a higher threshold, weights or credits may be further increased. In a further embodiment, a queue's weights or credits may be adjusted in part or in whole by a factor proportional to packet discard rate.

In an embodiment, a queue's weights or credits may be adjusted based upon packet latency. If the average (or maximum over some time period) packet latency for a queue serving, for example, a video or VoIP stream exceeds a threshold, weights or credits may be dynamically increased by an additional factor until the packet latency falls below the prescribed acceptable level, at which point the increase is no longer applied. The additional factor may be in itself application specific, for example with a different additional factor being applied for video than for voice, or may be dependent on the data rate of the service. In some embodiments, hysteresis is provided by including a delta between the average (or maximum over some time period) packet latencies at which weight and credit increases begin and end. Additionally, when the packet latency exceeds a higher threshold, weights or credits may be further increased. In a further embodiment, a queue's weights or credits may be adjusted in part or in whole by a factor proportional to packet latency.

In an embodiment, a queue's weights or credits may be adjusted based upon packet egress rate. If the average (or minimum over some time period) egress rate for a queue serving, for example, a video or VoIP stream drops below a prescribed acceptable level, weights or credits may be dynamically increased by an additional factor until the egress rate rises above the prescribed acceptable level, at which point the increase in weights or credits is no longer applied. The additional factor may be in itself application specific, for example with a different additional factor being applied for video than for voice, or may be dependent on the data rate of the service. In some embodiments, hysteresis is provided by including a delta between the average (or minimum over some time period) egress rates at which weight and credit increases begin and end. Additionally, when the egress rate drops below an even lower threshold, weights or credits may be further increased. In a further embodiment, a queue's weights or credits may be adjusted in part or in whole by a factor inversely proportional to egress rate.

In rapidly changing RF environments, such as in a mobile network with adaptive modulation and coding, additional factors may be used to adjust the weights and credits rapidly based on airlink factors. When a user equipment has good receive signal quality for transmission from a base station, the base station, such as an LTE eNodeB, may transmit data to the user equipment at a higher data rate and/or with higher likelihood of successful reception. Likewise, when the base station has good receive quality for transmissions from the user equipment, the user equipment may transmit data to the base station at a higher data rate and/or with higher likelihood of successful reception. If the signal quality is observed to be highly variable, an additional factor can be applied to increase weights for a particular user equipment's data streams when the signal quality is good between the base station and that user equipment and decrease weights when the signal quality is poor, thereby providing the bandwidth to data streams for a second user equipment. The adjustment may be application specific. For example, the weight for a queue containing video may have an additional factor applied to ensure optimal use of good signal quality, while a delay and error tolerant service, such as email, for the same user equipment, may have a different or no additional factor applied, relying more on retries built into protocols such as TCP or the LTE protocol stack.

In addition to the additional factors that may be applied to weights or credits in response to the environmental factors described above, weights and credits or the application factors which modify them may be further modified based on knowledge of the transport protocols used. For example, a service that has one or more retry mechanisms available such as TCP retries, LTE acknowledged mode, automatic retry requests (ARQ), or hybrid-ARQ (HARQ) may have different additional factors applied for the life of the data stream or dynamically in response to such environmental factors as signal quality and discard rate (e.g., due to congestion).

In an embodiment, the average bit rate of a data stream may be detected or estimated using techniques described above. Other methods may also be available depending upon the application. HTTP streaming, such as Microsoft HTTP smooth streaming, Apple HTTP Live Streaming, Adobe HTTP Dynamic Streaming, and MPEG/3GPP Dynamic Adaptive Streaming over HTTP (DASH), is one class of applications that supports video streaming of varying bit rate. In HTTP streaming, each video bitstream is generated as a collection of independently decodable movie fragments by the encoder. The video fragments belonging to bitstreams of different bit rates are aligned in playback time. The information about bitstreams, such as the average bit rate of each bitstream and the play time duration of each fragment, is sent to the video client (which may be a user equipment) at the beginning of a session in one or more files which are commonly referred to as playlist files or manifest files. This information may be detected by a network node such as a base station. In HTTP streaming of a live event, the playlist files or manifest files may be applicable to certain periods of the presentation, and the client needs to fetch new playlist files or manifest files to get updated information about the bitstreams and fragments in bitstreams.

Since the client has the information about bitstreams and fragments that it will play, it will fetch the fragments from bitstreams of different bit rates based on its current estimation of channel conditions. For example, due to variation in perceived channel conditions, a video client in a user equipment may fetch the first fragment from the bitstream of high bit rate, and the second fragment from the bitstream of low bit rate, and the next two fragments from the bitstream of medium bit rate. The channel conditions are often estimated by the video client based on information such as the time spent transporting the last fragment or multiple previous fragments and the size of these fragments. One deficiency of this approach is that the video client may not react fast enough to rapidly changing channel conditions. In one embodiment, the wireless access node, such as a base station, signals the current channel conditions to the video client, so the client can have more accurate information about the channel conditions and request the next fragment or the following fragments accordingly. In an alternative embodiment, the client may receive information regarding current channel conditions from the physical layer implementation, for example transmitter receiver module 279 of the station of FIG. 3.

In one embodiment, the packet inspection module 410 (FIGS. 6, 13) or the enhanced packet inspection module 410' (FIGS. 9, 13) detects the presence of the HTTP streaming session, and keeps copies of the playlist and manifest files. In one embodiment, the packet inspection module estimates the bit rate of the data stream for some period of time by detecting which fragments the client requests to fetch and actual times spent transferring the fragments.

Based on the dynamically calculated or estimated bit rate for a data stream, the weights or credits for a queue may be modified. In an embodiment, the dynamically calculated or estimated bit rate is compared to the queue egress rate and the queue's weights or credits are adjusted by the techniques described above. Additionally, in a case where a data stream was queued in a scheduling group scheduled by a weight based scheduling algorithm such as WFQ or WRR where weights were not based directly on bit rate, the data stream's queue may be moved to another scheduling group using a credit-based scheduling technique, such as PFS, basing credits on bit rates.

The packet inspection module 410 may compare the estimated bit rate of a specific application with the available channel bandwidth for transmission from the associated station. The instantaneous available bandwidth for transmission may be higher than the bit rate of the input traffic from a particular application. For example, an LTE base station using 20 MHz channels operating in 2x2 multiple-input, multiple-output (MIMO) mode has an instantaneous data rate of approximately 150 Mbps while a streaming video may have an average data rate of 2 Mbps and a peak data rate of 4 Mbps. In one embodiment, the wireless access node may buffer the data of an application and modify scheduler parameters to affect the instantaneous data rate and burst durations in advantageous ways.

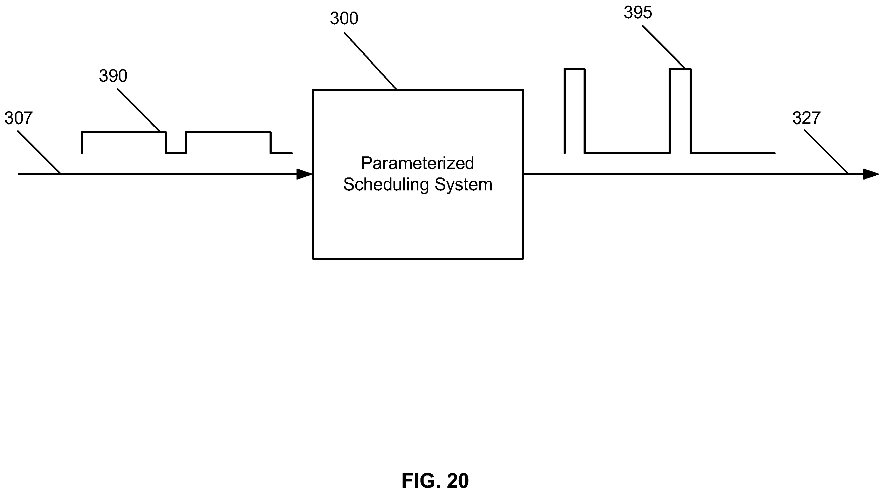

FIG. 20 illustrates an example of traffic shaping by a parameterized scheduling system. The parameterized scheduling system 300 (FIG. 5) receives incoming traffic 307 from an input communication link and transmits outgoing traffic 327 on an output communication link. In the example illustrated in FIG. 20, the incoming traffic 307 contains traffic from one or more applications. A portion of this traffic belongs to a data stream. The packet inspection module 410 (or enhanced packet inspection module 410') of the parameterized scheduling system 300 may detect the packets from the data stream and additionally detect an incoming traffic pattern 390 corresponding to packet transfer burst durations and bit rates. The parameterized scheduling system 300 may modify a scheduling parameter (or parameters) to control characteristics of the outgoing traffic 327. For example, the parameterized scheduling system 300 may change a window over which other scheduler parameters, such as accumulated credits, are updated. This allows better alignment of allocation of bandwidth for outgoing packet bursts with the availability of incoming packet bursts needing transmission over the output communication link. This can be combined with modification of scheduler parameters, such as weights and credits, based on application class, specific application, modulation and coding scheme, or some combination.

Modifications of scheduler parameters may be combined to alter the outgoing traffic pattern 395 for the application to have packet transfer bursts that have high instantaneous bit rate and short duration relative to the incoming traffic pattern 390. This may have many benefits. If modulation and coding schemes are rapidly changing, for example due to mobility, the scheduler parameters may be modified to give preference to bursting the data at high rates during periods of good signal quality, effectively increasing the total system capacity through use of more efficient modulation and coding schemes for more of the data. It may also be desirable to increase the amount of idle time between two bursts, thereby making it possible to put the receiver at the user equipment into sleep mode for a longer time. This may be used to reduce the amount of time the user equipment receiver must be turned on to receive the data from the wireless access node. This can reduce the power consumption of the user equipment. This can be implemented, for example, to align with Discontinuous Reception (DRX) protocol in 3GPP HSDPA or LTE.

Those of skill in the art will appreciate that even though the above functions are generally described as if they reside in a station such as a base station, in some embodiments the functions may reside in other devices. Any device that performs queuing and scheduling may perform the algorithms. For example, a user equipment may perform the described algorithms when deciding how to schedule packets for uplink transmission or for deciding for which queues to request bandwidth uplink from the base station. A device or module that schedules bandwidth on the backhaul to or from a base station may perform the algorithms.

In one embodiment, the functions are distributed. For example, referring to FIG. 8, the gateway 540 may detect the dynamic presence and subsequent absence of an application class, specific application, or transport protocol on a bearer, connection, or stream. The gateway 540 may signal that information to the radio access network (for example a base station) 550 to use in calculating AFs or additional factors. In another embodiment, the gateway 540 calculates application factors or enhanced weights or credits and signals them to the radio access network 550. In an embodiment, the radio access network 550 signals information such as buffer occupancy, signal quality, discard rates, etc. to the gateway 540, and the gateway 540 uses such information to schedule its egress traffic. Additionally, the gateway 540 may combine information from the radio access network 550 to calculate additional factors or enhanced weights or credits and signal them to the radio access network 550.

In an embodiment, information such as AF, alone or in combination with additional factors such as buffer occupancy, signal quality, discard rates, estimated bit rates, etc. may be used to compute an adjustment to the GBR setting typically established during the setup of a logical channel between network endpoints. For example, in an LTE network, an eNB scheduling parameter calculation module 335 may use the AF calculated for a particular data stream to request a modification of the corresponding data bearer's GBR by sending a message to the EPC packet gateway. In an alternate embodiment, an eNB scheduling parameter calculation module 335 may in addition request a QCI change, for example from a QCI which does not support GBR bearers to a QCI which does. Such requests may be made one or multiple times during the life of a data stream, and may be used alone or in combination with techniques described above, depending on conditions present at the eNB.

Efficient Detection

Processing of packets in the classification and queuing module 310 entails certain costs. For a function that is implemented in software running on a microprocessor, digital signal processor (DSP), or similar device, the processing cost is related to the computational complexity of the software instructions and resulting number of processor cycles (or instructions) required to complete the processing. This effort is often expressed in units of 'millions of instructions per second' (MIPS) or alternatively as a percentage of the total available MIPS for a given microprocessor (e.g., process X uses 50% of the total available MIPS). For a function implemented in integrated circuit hardware, processing cost may be expressed in terms of the die area (e.g., square millimeters, number of gates, number of look-up-tables) used to perform this function and the power dissipation of the hardware (e.g., in milliwatts or watts). The processing cost can also be expressed in terms of increased solution cost and price to a customer. Therefore, efficient packet inspection is valuable to reduce processing cost.

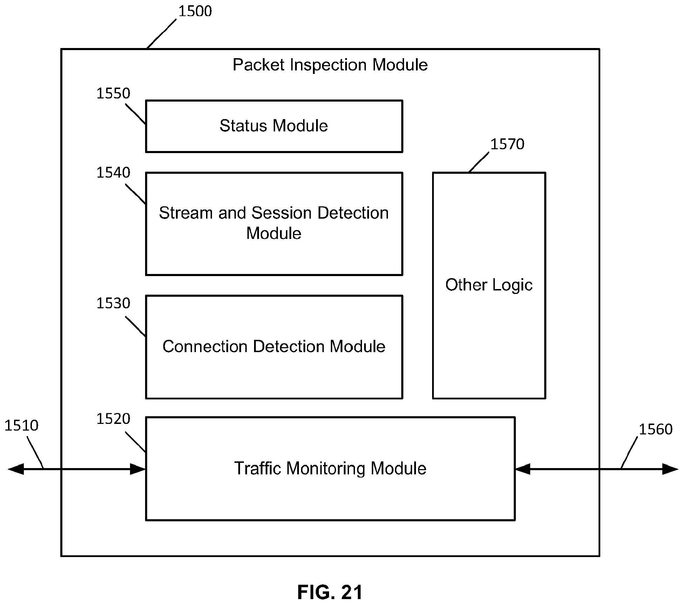

FIG. 21 is a functional block diagram of another embodiment of a packet inspection module 1500. The packet inspection module 1500 may be used as the enhanced packet inspection module in one of the classification and queuing modules described herein. The packet inspection module 1500 can efficiently identify application class, specific application, and application information. The enhanced packet inspection module 1500 includes a traffic monitoring module 1520 for determining which packets should incur further inspection, a connection detection module 1530 for detecting connections transporting streams that make up sessions, a stream and session detection module 1540 for detecting streams, sessions and application information, and a status module 1550 for maintaining state and history. The packet inspection module 1500 may also implement other functions which are generally represented by an other logic module 1570. Packets may enter the packet inspection module 1500 via a first bidirectional interface 1510 or a second bidirectional interface 1560. Packets that enter via the first bidirectional interface 1510 exit via the second bidirectional interface 1560, and vice versa.

Packets entering the packet inspection module 1500 via the bidirectional interfaces 1510, 1560 may be initially inspected by the traffic monitoring module 1520. The traffic monitoring module 1520 may inspect packets flowing in a single direction or both directions. In an embodiment, packets may be delayed in the packet inspection module 1500 via queues or buffers in order to provide time for other modules, for example, the connection detection module 1530 and the stream and session detection module 1540, to inspect and process packets identified for further inspection and processing. Alternatively, to limit transport latency, some or all packets (or portions of packets) may be copied for further inspection and processing while the original packets are forwarded to the next step in the path toward transmission. For example, the original packets may be supplied to the data queues 315 feeding the scheduler 330 in the parameterized scheduling module illustrated in FIG. 5.

To improve packet processing efficiency, the packet inspection module 1500 may employ one or more techniques to filter packets based on simple criteria that have a low processing cost so that only a subset of the packets received by the packet inspection module 1500 undergo more complicated packet inspection that has a higher processing cost.

In an embodiment, the traffic monitoring module 1520 may filter packets so that only uplink packets are inspected by the connection detection module 1530 or the stream and session detection module 1540. Filtering reduces the processing cost of detecting connections, streams, or sessions that are initiated by nodes at the edge of a network (for example, the user terminal device 560 of the wireless communication system in FIG. 8 or the client device 150 of the wireless communication network in FIG. 1). This is especially beneficial for those networks in which the uplink carries less traffic than the downlink such as mobile networks (e.g., LTE, WiMAX, or 3G cellular) or home internet networks (e.g., fiber-to-the-home (FTTH) networks, DOCSIS cable modem networks, or DSL networks).

For example, the traffic monitoring module 1520 may filter packets such that the connection detection module 1530 may receive and inspect only uplink packets to detect the initiation of a TCP connection via the detection of the SYN message sent from a client (e.g., user terminal device 560) to a server (e.g., data source 510). This technique may also be applied in reverse to improve processing efficiency for sessions initiated from a server (e.g., from the data source 510 or within the core network 102).

In an embodiment, one or more characteristics may be used to filter packets and reduce the processing cost to detect new connections based on protocols used. For example, knowledge that a mobile network operator (MNO) has configured its network using only a certain source IP address or source IP address range may be used when attempting to detect new UDP or TCP connections or streams. Alternatively, TCP source or destination port numbers may be used to filter packets. For example, to reduce processing cost an initial inspection stage may be employed to send only packets with headers containing TCP destination port 80 for further HTTP protocol processing.

In an embodiment, the traffic monitoring module 1520 may monitor only packets assigned to a specific class of service. For example, in an LTE radio access network, the traffic monitoring module 1520 may filter packets based on class of service and only pass packets corresponding to the lowest class of service, QCI=9, to the connection detection module 1530 and/or the stream and session detection module 1540 for further processing but ignore packets assigned to all other classes of service, QCI=1-8. In a further example, the traffic monitoring module 1520 may monitor all packets to or from users who have paid extra for an MNO's 'Gold' service level while packets to or from users participating in the MNO's 'Silver' or 'Bronze' service level may not be monitored. Many other filter systems are possible. Additionally, one or more filters may be employed in logical combination with each other and/or other detection techniques.

In an embodiment, filters based on packet size may be used in the traffic monitoring module 1520. For example, in detecting a particular packet message during either connection or session initiation, there may be a narrow range of packet sizes corresponding to the specific message of interest. A packet filter that only forwards packets for additional processing if the packets are within a size range (minimum and maximum) or above or below a size threshold may be used to reduce processing cost. For example, a video streaming session may be detected based on the characteristics of the real-time streaming protocol (RTSP). RTSP packets are encapsulated within TCP/IP frames and carried across an IP network, for example, as illustrated in the wireless communication system depicted in FIG. 8.

RTSP establishes and controls multimedia streaming sessions with a client and a server exchanging the messages. A first RTSP message sent from the client to the server is a request message. The first line of a request message is a request line. The request line is formed with the following 3 elements: (1) Method; (2) Request-URI; and (3) RTSP-Version. RTSP defines methods including OPTIONS, DESCRIBE, ANNOUNCE, SETUP, PLAY, PAUSE, TEARDOWN, GET_PARAMETER, SET PARAMETER, REDIRECT, and RECORD.

In an embodiment, the stream and session detection module 1540 may capture information during the DESCRIBE phase of the video streaming session setup by inspecting uplink packets identified for further processing by the traffic monitoring module 1520. A client DESCRIBE packet may be detected using a string (i.e., character text) match on the text 'DESCRIBE' contained in the RTSP message within the TCP payload. The server response in this case would be transported on the typically more heavily loaded downlink direction. This server response may contain critical information (e.g., an 'm=video' field) which may be used to determine the application class (e.g., video streaming). To reduce the processing cost to detect the server reply, the traffic monitoring module 1520 may be configured to only identify packets from the associated TCP connection for further RTSP processing if those packets have a payload size between 950 and 970 bytes. To further reduce processing cost, in an additional embodiment, the filtering of packets based on size and subsequent RTSP processing may only be active for a limited time duration or for a finite number of packets after detecting the DESCRIBE packet transmitted by the client. For example, a packet inspection system attempting to detect a DESCRIBE response, including the filtering technique above, may only be active for 1 second, after which the inspection process terminates.

In an alternative embodiment, the initiation of a video streaming session using the RTSP protocol may be detected by detecting an RTSP PLAY command issued from the client. The server response, typically carried to the client on the more heavily loaded downlink direction contains a playback range field that may be stored in the status module 1550. The detection of the RTSP PLAY response from the server may be improved, for example, by passing only packets of size 360-380 bytes for further RTSP processing. To further reduce processing cost, the filtering by packet size and RTSP processing may only be active for a limited time duration or for a finite number of packets after detecting the PLAY packet. For example, packet inspection to detect a PLAY response may only be active for 1 second, after which the inspection process terminates.

A packet or message size filter may be used to reduce the processing cost for other protocols, application classes, and specific applications. The traffic monitoring module 1520 may employ several filtering mechanisms simultaneously. For example, traffic monitoring module 1520 may simultaneously filter by LTE bearer or QCI, filter on an already detected TCP connection, and filter on packet size for a finite time period.

The connection detection module 1530 inspects packets to determine when a network connection, used to support an application stream or session, has been initiated or terminated. The connection detection module 1530 may inspect packets identified for further processing by traffic monitoring module 1520 to detect the initiation of a new TCP connection. Example connections may occur between the user terminal 560 and the data source 510 of the wireless communication system of FIG. 8, when a new LTE user equipment (UE) 150 has attached to an LTE enhanced node B (eNB) pico station 130 in the communications network of FIG. 1, or when a new dedicated data bearer has been created between the LTE UE and the cNB. The packets inspected by the connection detection module 1530 may be packets identified for further processing by the traffic monitoring module 1520.

In an embodiment, the traffic monitoring module 1520 may monitor packets in a unique manner (including the absence of monitoring) based upon the association of a packet with one or more of the following characteristics: logical link (e.g., LTE data bearer), connection (based on previous detection by the connection detection module 1530), data stream, application session (based on previous detection by the stream and session detection module 1540), class of service, network service level agreement (SLA), or network policy settings.

After a new connection has been detected by the connection detection module 1530, a context entry may be created in the status module 1550. After the detection of a terminated connection, a context entry may be deleted or modified in the status module 1550. In an embodiment, the status module 1550 maintains a context for each detected connection. The context may include characteristics for layers generally corresponding to the Open Systems Interconnect (OSI) layer model. Example characteristics include:

> Layers 1-2: Ethernet MAC address, 3GPP bearer ID or tunnel ID, 3GPP mobile phone identifiers (e.g. IMSI, IMEI, GUTI, S-TMSI)
> Layer 3: source/destination IP address
> Layer 4: protocol type (e.g. TCP, UDP)
> Layer 5: source/destination TCP port#, protocol type (e.g. RTP, RTCP, RTSP)

In an alternative embodiment, real-time or historical metrics may also be collected and stored in a connection's context entry. For example, a context entry may contain information regarding a connection's duration (e.g., seconds), number of bytes transferred, number of packets transferred, average bitrate (e.g., kbits/second), maximum bitrate (e.g., measured over a time interval). In addition to use in analytics, the real-time metrics may be used for reactive adjustment of scheduler parameters, such as application factors. The historical metrics may be used for predictive adjustment of scheduler parameters. A context may also contain session quality metrics (for example, packet loss statistics, packet retransmission statistics, and packet error rate) that may also be used to adjust scheduler parameters.

In an embodiment, the context stored in the status module 1550 may contain entries associated with active connections (i.e., those connections that have been initiated but not yet terminated). In an alternative embodiment, the context may additionally retain a history of connections including information regarding connections that have been terminated. In an embodiment, the context entries associated with terminated connections may contain the same information as entries for active connections (e.g., a combination of characteristics listed above). Alternatively or additionally, the context entries associated with terminated connections may contain information summarizing the connection history. For example, the context entry may contain a subset of the above characteristics plus information such as the total number of bytes transferred or the duration of the connection.

In an embodiment, the context may be stored by the status module 1550 in the form of a file, array, linked list, or other suitable storage mechanism providing random read/write access.

Further packet inspection may be performed by the stream and session detection module 1540 to identify the initiation or termination of the streams comprising a session on a connection and to identify the application class, specific application, or other characteristics. Example characteristics that may be identified by the stream and session detection module 1540 include:

Layer 6: technology type (HTTP, HTTPS, FTP, Telnet)

Layer 7: application class (e.g. streaming video, 2-way video calling, voice, email, internet browsing, gaming, machine-to-machine data, etc) and specific application (e.g. YouTube, Netflix, Hulu, Skype, Chrome, etc).

Many other connection, stream, session, and application characteristics could be identified in addition to or instead of those listed above.

In an embodiment, application class, specific application, and other characteristics described above, which have been detected by the stream and session detection module 1540, are added to a connection's context entry in the status module 1550.

The packet inspection module 1500 can be implemented in a single wireless or wireline network node, such as a base station, an LTE eNB, a UE, a terminal device, a network switch a network router, a gateway, a backhaul device, or other network node (e.g., the macro base station 110, pico station 130, enterprise femtocell 140, or enterprise gateway 103 shown in FIGS. 1 and 2 or devices implementing a backhaul or in a network gateway in the core network). In other embodiments, the functions of the packet inspection module 1500 can be distributed across multiple network nodes. In an example LTE network, the traffic monitoring module 1520, the connection detection module 1530, and the stream and session detection module 1540 may reside in a packet gateway whereas the status module 1550 may reside in an eNB base station. Many other functional partitions are similarly possible. Additionally, individual modules of the packet inspection module 1500 may be distributed across multiple devices. Furthermore, functions of the various modules of the packet inspection module 1500 can divided, distributed, and/or combined in ways other than the one shown in FIG. 21.

In an embodiment, functions within the packet inspection module 1500 may be partitioned such that a subset of functions processes only data plane packets while a different subset of functions processes only control plane packets. For example, a function in the connection detection module 1530 used to detect a new UE or new data bearer in an LTE eNB base station may process only 3GPP control plane packets. Alternatively, a function in the connection detection module 1530 used to detect a new TCP connection on an LTE data bearer in an LTE eNB base station may process only data plane packets.

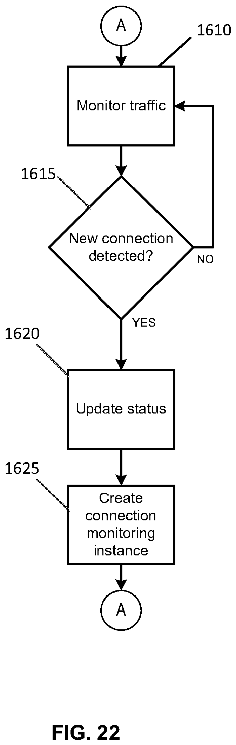

FIG. 22 is a flowchart of a process for detecting initiation of connections. The process is described as implemented by the packet inspection module 1500, but the process may also be implemented by other modules. In step 1610 packets are inspected by the traffic monitoring module 1520 and the connection detection module 1530 to identify new connections. For example, in an LTE base station, the traffic monitoring module 1520 may inspect Layer 1 or 2 headers to identify a new 3GPP bearer ID. Subsequently, the connection detection module 1530 may inspect packets to identify the setup of a TCP connection via detection of the packets used for TCP establishment (e.g., SYN, SYN-ACK, ACK) between a TCP client and a TCP server. Alternatively or additionally, the connection detection module 1530 may inspect packets to identify connection information currently unknown to the status module 1550 or known but in a terminated state. For example, the connection detection module 1530 may inspect packets to identify combinations of IP source and destination addresses and TCP ports currently unknown to the status module 1550 or known but in a terminated state.

In step 1615, the connection detection module 1530 determines if the traffic monitored in step 1610 constitutes a new connection. In an embodiment, the connection detection module 1530 retains the state of the connection establishment protocol (e.g., TCP SYN, SYN-ACK, ACK messages) and identifies a new connection based upon a successful result from that protocol. In an alternate embodiment, the connection detection module 1530 compares the connection identification information gathered during step 1610 to the context stored in the status module 1550. If the connection identification information (e.g., logical link, IP addresses, UDP socket) matches an existing, active connection in the context stored by the status module 1550, then the connection information is deemed to be for an existing connection rather than a new connection and control returns to step 1610. However, if the connection information is not found in the existing, active context stored by the status module 1550, a new connection has been identified. At step 1620 the connection information is stored in the context stored by the status module 1550. The process then continues to step 1625 where monitoring of the connection is initiated for detection of information relating to the connection status and any streams, sessions, and applications associated with traffic transported on the connection. Then the process returns to step 1610 to monitor for new connections. The steps of the process for detecting initiation of connections may be performed concurrently. Additionally, the process may be modified by adding, omitting, reordering, or altering steps.

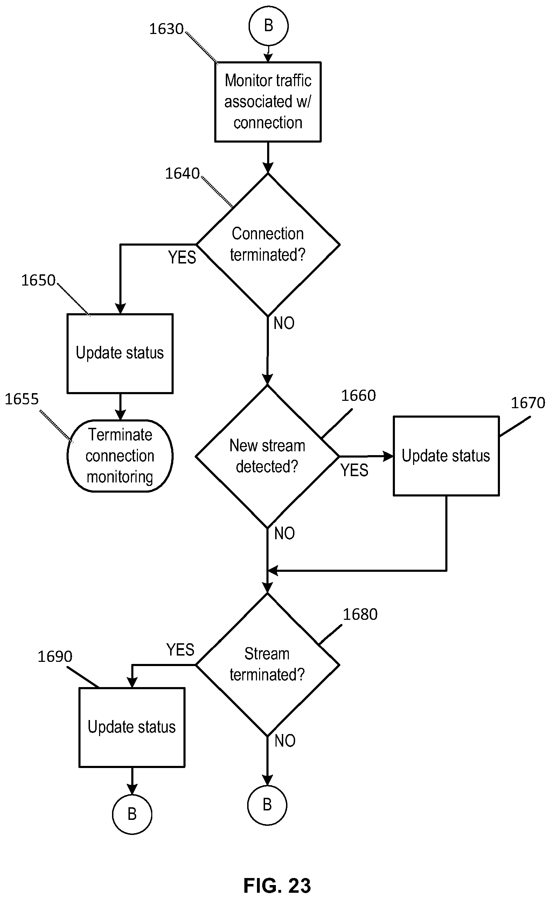

FIG. 23 is a flowchart of a process for monitoring a connection. The process may be used to perform step 1625 of the process for detecting initiation of connections illustrated in FIG. 22. The process for monitoring a connection is described as implemented by the packet inspection module 1500, but the process may also be implemented by other modules. The process for monitoring a connection illustrated in FIG. 23 monitors traffic for a specific connection. Accordingly, the packet inspection module 1500 may perform an instance of the process for each active connection.

In step 1630, packets that are associated with the specific connection are monitored. Based on filtering criteria, the traffic monitoring module 1520, identifies packets related to the state of the specific connection for further processing by the connection detection module 1530 and identifies packets related to stream creation and termination and forwards those packets to the stream and session detection module 1540. The traffic monitoring module 1520 may also identify packets for further inspection for stream, session, or application information of interest. These packets may be forwarded to another module such as the other logic module 1570, the status module 1550, or the stream and session detection module 1540. For example, the traffic monitoring module 1520 may be configured to identify packets from a particular video stream periodically so that another module, for example, the other logic module 1570, may determine the current playback state. Alternatively or additionally, the traffic monitoring module 1520 may detect TCP retransmission requests for the particular connection so that the status module 1550 may record the metrics for use in assessing the quality of the service provided over the connection. The traffic monitoring module 1520 may also be configured to identify patterns in traffic and use the patterns to aid in application detection.

In step 1640, the connection detection module 1530 inspects packets to determine if the connection being monitored has been terminated. For example, for TCP connections, a FIN message pair with one message sent from each of the TCP server and the TCP client is the formal method of terminating a TCP connection. If a FIN message is detected from both TCP client and TCP server, then the connection detection module 1530 may conclude that the TCP connection has been terminated. To reduce computational complexity and processing cost, detection of only one or the other of the two FIN messages may be used to determine that a connection has been terminated. The processing cost may be further reduced when the connection detection module 1530 detects FIN messages only in the link direction that carries less traffic. For example, on many mobile networks, the uplink direction often carries less traffic than the downlink direction. Therefore, in this case detection of a FIN message on the uplink direction of link 190 requires fewer packets to be inspected and thus entails a lower processing cost than the detection of FIN messages on the downlink direction or the detection of both FIN messages.

Different methods for detection of initiation and termination of connections, streams, and sessions may have different costs, for example, in terms of processing power. The methods may also have different robustness. There could be a cost associated with a certain method whereby the method is only used if sufficient computational resources are available and a less robust but less costly method is used otherwise. Available computational resources could vary dynamically, for example, with temperature, battery charge level, power saving modes, or memory utilization. Computational resources may also vary as a function of network traffic load as measured by total system bitrate (e.g. megabits/second), packet rate (e.g. packets/second), number of active connections, streams, and/or sessions.

If the connection has been terminated as determined by step 1640, the status is updated in step 1650. In an embodiment, the entry and all information pertaining to the terminated connection may be removed from the context stored by the status module 1550. In an alternative embodiment, a historical record of the connection may be retained in the context entry along with an update of the entry's current status indicating that it is no longer active. This may be used for predictive updating of scheduler parameters. After updating the status module 1550, control proceeds to step 1655 where the process monitoring the connection is terminated. Termination of the process may include de-allocating resources used to perform the monitoring.

If the connection is not terminated, the process continues to step 1660. In step 1660, the stream and session detection module 1540 inspects packets to detect the initiation of a new stream or session and to identify the application class, specific application, or other session or stream characteristics. The detection of a new stream or session may cause the traffic monitoring module 1520 to modify the methods used to identify packets for further processing. For example, if the stream is determined to be a video stream over TCP, traffic monitoring module 1520 may be configured to periodically identify packets from which to detect or estimate video playback progress. The progress may be monitored, for example, by monitoring the TCP sequence number in an HTTP server's GET response and the client-side TCP ACK messages.

In an embodiment, previously detected characteristics (e.g., detected in step 1615 of the process for detecting initiation of connections of FIG. 22) may also be used to determine that a stream has been initiated and to identify the application class and/or specific application of the session associated with the stream. For example, IP source and destination addresses detected during TCP connection establishment may be used to determine the application class and specific application of the data stream or session. With the IP source and destination addresses, the packet inspection module 1500 can perform a reverse domain name system (DNS) lookup or Internet WHOIS query to establish the domain name and/or registered assignees sourcing or receiving Internet-based traffic. The domain name and/or registered assignee information can then be used to establish both application class and specific application for the data stream based upon a priori knowledge of the domain or assignee's purpose. The application class and specific application information, once derived, can be stored for reuse, for example, by the status module 1550 or by the other logic module 1570. For example, if more than one user device accesses Netflix, the packet inspection module 1500 can be configured to retain the information so that the packet inspection module 1500 would not need to determine the application class and specific application for subsequent accesses to Netflix by the same user device or another user device.

For example, if traffic with a particular IP address yielded a reverse DNS lookup or WHOIS query that included the name 'YouTube' then this traffic stream could be considered a unidirectional video stream (Application Class) using the YouTube service (Specific Application). In an embodiment, a comprehensive mapping between domain names or assignees and application class and specific application can be maintained. The mapping may be periodically updated to ensure that the mapping remains up to date.

In an embodiment, the stream and session information detected in step 1660 in combination with the underlying connection information is compared to existing stream and connection information stored by the status module 1550. If a match to the detected stream and connection information is not found in the stored context, then the stream may be declared new and stored in step 1670 as a new stream entry associated with the underlying connection in the status module 1550.

In an embodiment, information about multiple streams may be compared to determine whether the new stream constitutes a new session or is part of an existing session. For example, if a stream is detected to be a video stream over RTP on the same logical link for the same user as a previously detected and still active voice stream over RTP and a previously detected recent SIP signaling stream, the combination of streams may be identified as a conversational video (e.g., video Skype) session.

In another example, voice over LTE (VoLTE) and interactive video combined with VoLTE may be detected. The detection may occur even though the IP Multimedia Subsystem (IMS) signaling of the setup of the services may be encrypted (as it is in LTE). For example, the packet inspection module 1500 may detect IMS signaling between the core network and a user equipment, followed shortly thereafter by the creation of a bearer or stream with a bit rate consistent with voice (e.g., 32 kbps). This information may be used to infer that a VoLTE session was initiated on the new bearer or stream. An example use of the information is by the scheduler parameter calculation module 335 of FIG. 5 to adjust scheduler parameters. If a second bearer or stream with a bit rate consistent with video is established with the proper temporal relationship, it may be inferred that the combination represents an interactive voice plus video session. Knowing that the voice portion of such an interaction is more important to the user's quality of experience than the video portion, the scheduler parameter calculation module 335 may prioritize the voice bearer over the video bearer. The video portion may be deemed lower priority than other video usage, such as video on demand, while the voice portion is given higher priority.

In another example, if a stream is determined to carry streaming video with a certain playback range immediately following a stream that carried a portion of the same video with a different playback range, the two streams may be identified as part of the same video streaming session. Maintaining the status of the earlier stream (even after termination) by the status module 1550 allows this association to occur. In an embodiment, the saved context is updated with the stream, session, application class and specific application information described above. Such stream relationships may be used to determine device information. For example, detecting that multiple sequential streams versus a single stream are used for a YouTube video may be used to distinguish an Apple product using the iOS operating system from a device running the Android operating system. Detection of the stream, session, application, and device information may be used in the calculation of scheduler parameters such as application factors impacting weight and credits. The history may also be used for predictive modification of scheduler parameters.

Alternatively or additionally, detailed characteristics about the specific session may also be added to the context (step 1670 or step 1630) based on information available in packet headers or from packet stream profiling (as may be performed in step 1630). For example, the context describing a streaming video session may also include the following characteristics: video clip duration, resolution, frame rate, bit rate, container format, video coder-decoder (codec) format and configuration, client device (e.g., Android smart phone, Apple iPad, TV set-top box). The characteristics may be used, for example, to modify application factors used in scheduling. Other characteristics associated with streaming video, and with other application classes, may also be identified and stored in the context.

Once status or context has been updated in step 1670 or if a new session is not detected in step 1660, the process continues to step 1680. In step 1680, the stream and session detection module 1540 attempts to identify the termination of a stream and its associated session. As more than one stream may exist on a connection, in an embodiment, the process may attempt to identify the closure of more than one stream. Additionally, step 1680 may determine whether the termination of a stream constitutes termination of a session by comparing the stream to the context for the session. If the stream is the last active stream associated with a session, the session may be deemed terminated. Alternatively, a session may not be terminated immediately. For example, in the case of a session that is an instance of the YouTube application on an iPhone, the session may be made up of multiple sequential streams. Maintaining the session over these streams is beneficial in calculating scheduler parameters such that quality of experience is maintained.

Clients using the HTTP protocol to initiate a session may use an HTTP GET command to request an HTTP file with a specified content length from an HTTP server. In an embodiment, for sessions initiated using the HTTP protocol, session termination may be detected by monitoring the client-side TCP ACK number. If an HTTP server's GET response starts with TCP sequence number N and the length of the HTTP response body (content length) is L, the session may be deemed terminated when the client sends a TCP segment with ACK number equal to N+L. Alternatively, to accommodate fixed bit length implementations, the session may be deemed terminated when a gap (for example, a minute or more) of no packets on a TCP connection follows a TCP segment with ACK number equal to (N+L) modulo 2 EXP B, where B is the bit length of the TCP segment number field, thus allowing the TCP sequence number to wrap around.

To reduce processing cost, the stream and session detection module 1540 may be configured to inspect the client ACK number periodically rather than continuously. Inspection for other information may also be performed intermittently over time. The intermittent processing may occur at regular or irregular time intervals. The inspection period may be fixed or may be adjusted based upon the number of packets remaining in a transmission. For example, after a new HTTP session has been detected, the stream and session detection module 1540 may monitor packets for 100 ms in each 1 second period. As the session nears completion, the stream and session detection module 1540 may be configured to inspect a larger percentage of packets as shown, for example, in the table below.

| Session completeness | Packet monitoring period | Total Period |
|---|---|---|
| <90% | 100 ms | 1 second |
| 90-95% | 250 ms | 1 second |
| 95-97% | 500 ms | 1 second |
| > 97% | 1 second | 1 second |

In the above example, session completeness may be calculated as current bytes transmitted (most recent client ACK number minus N) divided by the total bytes to be transmitted (L). Other techniques may be employed to adjust the packet monitoring period which may result in further improvements to processing cost and/or termination detection accuracy.

As there is risk that the detection of session termination is missed by employing the above technique, the stream and session detection module 1540 may also use this technique in conjunction with other methods such as session timeout (e.g., no session packets sent over a specified time period) or bitrate techniques, as described below.

If no detection of a terminated session has occurred, the process returns to step 1630. If in step 1680 it is determined that a session has been terminated, the process continues to step 1690 and the status is updated. In an embodiment, the status is updated by the removal of the current session, application class, specific application, and related information stored by the status module 1550. In an alternative embodiment, a historical record of the session may also be retained by the status module 1550. This historical record can include some or all of the session characteristics stored in the context while the session was active. Once the status has been updated, the process returns to step 1630 where further monitoring of the connection occurs. In an alternative embodiment for which only a single session may be associated with each connection, the process may proceed from step 1690 to step 1655.

In an embodiment, the steady state bit rate of a data stream may be used to identify the application class or specific application of a new session. For example, a session with a bidirectional data stream having a bitrate of 64 kbps may be characterized as a 'voice' application class, based on the bitrate associated with the G.711 codec. In an alternative embodiment, such a stream may be considered a voice application class only after the session has been ongoing for a time larger than a minimum time period (e.g., 3 seconds). To accommodate the proliferation of voice codecs with differing compression ratios and codecs with variable bit rate capabilities, the above technique may be further modified to detect bidirectional data streams with bitrates between a minimum and maximum value, such as 8 kbps to 64 kbps.

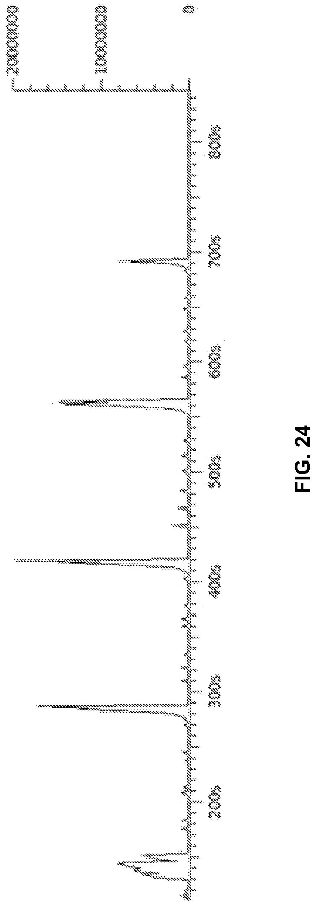

Similar techniques may be used to detect the presence of streaming video. For example, the packet inspection module 1500 may detect the presence of a high definition (e.g., 1080p) video streaming session by measuring that the average, unidirectional bitrate over a time period is within a predetermined minimum and maximum bitrate range (e.g., between 1 Mbps and 4 Mbps). In addition, the bitrate pattern (i.e. the bit rate measured and tracked over some time period) may also be used to determine the application class or specific application. For example, a YouTube video server using the HTTP protocol transmits data to an Android smart phone in a pattern of short, high rate bursts followed by long, very low rate quiet periods. An example of such a pattern is illustrated in the bitrate versus time graph of FIG. 24. The packet inspection module 1500 may be configured to detect this pattern using a combination of burst thresholds (e.g., bursts larger than some minimum rate) and the ratio between burst period and quiet period. In addition, the traffic monitoring module 1520 or the stream and session detection module 1540 may detect zero length TCP keep-alive messages in the quiet periods adding confidence to the determination that the pattern represents a YouTube video session with an Android YouTube application. In an alternative embodiment, these detection characteristics may be a function of other factors, such as the client device, usage history (e.g., recent playback of high definition video), transport channel conditions, or network operator. The factors may be known in advance.

The use of bitrates and/or bitrate patterns may be extended to detect other application classes or specific applications. Other examples include gaming, machine-to-machine communication, and video conferencing.

Additionally or alternatively, the use of bitrates and bitrate patterns may be used by the stream and session detection module 1540 to determine that a stream has been terminated (step 1680). For example, if a stream has been detected and is classified as a streaming video session (via bitrate detection or other methods), the stream and session detection module 1540 may measure the average bitrate (e.g., 2 Mbps) at the beginning of the stream and on a periodic basis thereafter. If the bitrate falls below a specified threshold (e.g., 10% of the measured average bitrate) over a specified period of time (e.g., 3 seconds) or across a specified number of samples (e.g., three 100 millisecond samples taken every second), then the stream may be deemed terminated. To reduce processing cost, the bitrate monitoring may be configured to be less frequent. Alternatively, to improve detection speed, the bitrate monitoring may be configured to be more frequent.

In an embodiment, the bitrate monitoring may be used or configured uniquely per stream or session. For example, for an HTTP based video streaming session, the termination scenarios may be considered to be of finite number and reliable. In such a scenario, bitrate monitoring may be used as a fallback or safety net to detect the unlikely cases of termination via unknown or unpredicted causes or in case the expected termination protocol is missed. In such a case, bitrate monitoring may be set to be very infrequent (e.g., every 10 seconds) to minimize processing cost. It may alternatively be disabled to minimize processing cost. In contrast, for sessions, streams, or connections having protocols, application classes, and/or specific applications unknown to the packet inspection module 1500, there is higher risk that the termination of the stream may not be detected based on the detection and inspection of protocol messages. In such a case, bitrate monitoring may be configured on a very frequent basis (e.g., every 100 milliseconds) since bitrate monitoring may likely be the only mechanism for detecting the stream or session termination.

In an alternative embodiment, the use of bitrate and bitrate patterns may be used by the connection detection module 1530 (step 1640) to determine that a connection has been left in an inactive and/or error state and should be deemed terminated. For example, if the average bitrate of a TCP based connection falls to zero over a specified length of time (e.g., minutes or hours), then the connection detection module 1530 may conclude that the connection has been broken in a manner that has not resulted in an orderly connection tear-down, for example, using FIN messages. In an alternative embodiment, the connection detection module 1530 may count TCP segments in one or both network directions. If the total number of segments is zero over a specified length of time, the connection detection module 1530 may conclude that the connection may be deemed terminated.

In an embodiment, application class or specific application may be established by inspection of the protocols that establish the session. For example, to identify HTTP based video streaming, the stream and session detection module 1540 may be configured to inspect the 'Content Type' field in a Hyper Text Transport Protocol (HTTP) packet. The content type field contains information regarding the type of payload based on the definitions specified in the Multipurpose Internet Mail Extensions (MIME) format as defined by the Internet Engineering Task Force (IETF). For example, the following MIME formats would indicate either a unicast or broadcast video packet stream: video/mp4, video/quicktime, video/x-ms-wm. To reduce processing cost, the application detection module may be configured to inspect packets for the 'Content Type' field in the downlink direction only after the successful detection of an HTTP 'Get' request in the uplink direction and only for a limited period of time (e.g., 2 seconds).

According to an embodiment, the stream and session detection module 1540 is configured to inspect the Host field contained in an HTTP header. The Host field typically contains domain or assignee information, which can be used to map the stream to a particular application class or specific application. For example, an HTTP header field of "v11.lscache4.c.youtube.com" could be inspected and mapped to Application Class = video stream, Specific Application = YouTube. In order to reduce processing cost for the detection of client initiated video sessions (for example, initiated by the user terminal 560 of the wireless communication system of FIG. 8), in an embodiment, the detection of the Host field may be performed only on packets traveling in the uplink direction. Additionally, since the Host field is contained deep within the client initiated HTTP GET command (as shown in the sample GET command below), the method for detecting and parsing the Host field may be initiated only following the successful detection of the GET string at the beginning of the HTTP message.

GET /videoplayback?id=c68bbc97919168d4&itag=36&source= youtube&uaopt=no-save&el=videos&devKey= ATdpM7DMA4JyVrf7elHDrdsO88HsQjpE1a8d1GxQnGDm&app=youtube_gdat a&ip=0.0.0.0&ipbits=0&expire=1332034374&sparams=id,itag, source,uaopt,ip,ipbits,expire&signature= 4AF8DB2C574B82C04A78657140CEA86B46D90D14. D84A0FC7946870773A2FAE5AA6B6183D289BCC79&key=yta1&androidcid= android-google&cms_redirect=yes HTTP/1.1 Host: o-o.preferred.dfw06g01.v3.lscache3.c.youtube.com User-Agent: stagefright/1.1 (Linux;Android 2.3.7)

To further improve efficiency, in an embodiment, the above techniques may be logically combined so that the detection of the application class or specific application using one technique suspends additional packet inspection of the same connection by other techniques. For example, if one technique to detect YouTube is successful then packet inspection using the HTTP MIME approach may be suspended.

In an alternative embodiment, to further improve efficiency, the application class or specific application may be determined by the use of class of service (CoS) packet markings. For example, a MNO may decide to use LTE QCI=3 for real-time gaming and QCI=5 for IMS signaling and configure the packet inspection module 1500 in an LTE eNB with this information. Thus, packets arriving at the eNB with these characteristics may be quickly evaluated and removed from further processing.

In an embodiment, the termination of a logical link or messages relating to the termination of a logical link may be used by the connection detection module 1530 to determine that a connection has been terminated. For example, in an LTE network, signaling messages passed to the radio resource control (RRC) layer from the physical (PHY) layer indicating the loss of an RF link to a UE may be used by the connection detection module 1530 to terminate all sessions and connections associated with the UE.

In an embodiment, control plane messages carried across a network are used to detect the termination of a data plane connection by the connection detection module 1530. For example, access stratum (AS) control plane messages are sent by an LTE UE to a serving eNB to initiate and confirm handover of the UE to a new, target eNB. These messages may be detected by the connection detection module 1530 and may be used to declare the termination of all sessions, streams, and connections associated with the UE. In an alternative example, AS control plane messages between the eNB and UE arc used for releasing (terminating) a dedicated data bearer. These messages may be detected by the connection detection module 1530 and used to declare that all connections associated with the data bearer have been terminated.

Those of skill will appreciate that the various illustrative logical blocks, modules, controllers, units, and algorithm steps described in connection with the embodiments disclosed herein can often be implemented as electronic hardware, computer software, or combinations of both. To clearly illustrate this interchangeability of hardware and software, various illustrative components, units, blocks, modules, and steps have been described above generally in terms of their functionality. Whether such functionality is implemented as hardware or software depends upon the particular system and design constraints imposed on the overall system. Skilled persons can implement the described functionality in varying ways for each particular system, but such implementation decisions should not be interpreted as causing a departure from the scope of the invention. In addition, the grouping of functions within a unit, module, block or step is for ease of description. Specific functions or steps can be moved from one unit, module or block without departing from the invention.

The various illustrative logical blocks, units, steps and modules described in connection with the embodiments disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor can be a microprocessor, but in the alternative, the processor can be any processor, controller, or microcontroller. A processor can also be implemented as a combination of computing devices, for example, a combination of a DSP and a microprocessor, a plurality of microprocessors, one or more microprocessors in conjunction with a DSP core, or any other such configuration.

The steps of a method or algorithm and the processes of a block or module described in connection with the embodiments disclosed herein can be embodied directly in hardware, in a software module (or unit) executed by a processor, or in a combination of the two. A software module can reside in RAM memory, flash memory, ROM memory, EPROM memory, EEPROM memory, registers, hard disk, a removable disk, a CD-ROM, or any other form of machine or computer readable storage medium. An exemplary storage medium can be coupled to the processor such that the processor can read information from, and write information to, the storage medium. In the alternative, the storage medium can be integral to the processor. The processor and the storage medium can reside in an ASIC.

The above description of the disclosed embodiments is provided to enable any person skilled in the art to make or use the invention. Various modifications to these embodiments will be readily apparent to those skilled in the art, and the generic principles described herein can be applied to other embodiments without departing from the scope of the invention. Thus, it is to be understood that the description and drawings presented herein represent a presently preferred embodiment of the invention and are therefore representative of the subject matter, which is broadly contemplated by the present invention. It is further understood that the scope of the present invention fully encompasses other embodiments that may become obvious to those skilled in the art.

**Claims**

**1.** A communication device, comprising:
a parameterized scheduling module configured to receive a plurality of packets and comprising a packet inspection module (1500), wherein the packet inspection module comprise:

a traffic monitoring module (1520) configured to filter the plurality of packets according to a packet feature to output a plurality of first filtered packets and a plurality of second filtered packets, wherein the packet feature is associated with packet size;
a connection detection module (1530) configured to receive the plurality of first filtered packets;
a stream and session detection module (1540) configured to detect information about streams, sessions, and application associated with the filtered packets; and

a status module (1550) configured to store the information,
wherein the traffic monitoring module (1520) filters the plurality of first filtered packets according to the information and transmits the plurality of second filtered packets to a server,
wherein the traffic monitoring module (1520), the connection detection module (1530), and the stream and session detection module (1540) operate at a plurality of protocol levels used in communicating the data packets, wherein the traffic monitoring module (1520) is further configured to analyze the data packets at a first one of the protocol levels to filter which of the data packets will be analyzed by the connection detection module (1530) and the stream and session detection module (1540).

2. The communication device of claim 1, wherein the traffic monitoring module (1520) is further configured to monitor the received data packets on an intermittent basis.

3. The communication device of claim 1, wherein the traffic monitoring module (1520) is further configured to monitor to analyze a bitrate of the data packets.

4. The communication device of claim 1, wherein the detected information about applications includes application classes and specific applications.

5. The communication device of claim 1, wherein the traffic monitoring module (1520) is further configured to filter the data packets including filtering based on a direction of transmission.

6. The communication device of claim 1, wherein the traffic monitoring module (1520) is further configured to filter the data packets including filtering based on internet protocol addresses.

7. The communication device of claim 1, wherein the traffic monitoring module (1520) is further configured to filter the data packets including filtering based on transport layer ports.

8. The communication device of claim 1, wherein the traffic monitoring module (1520) is further configured to filter the data packets including filtering based on users associated with the data packets.

9. The communication device of claim 1, wherein the traffic monitoring module (1520) is further configured to filter packets such that the connection detection module is configured to receive and inspect uplink packets to detect the initiation of a TCP connection via the detection of a SYN message.

10. The communication device of claim 1, wherein the traffic monitoring module (1520) is further configured to filter the data packets for inspecting a host field contained in an HTTP header of the data packets.

11. The communication device of claim 1, wherein the traffic monitoring module (1520) is further configured to filter the data packets including filtering based on class of service.

**Patentansprüche**

1. Kommunikationsvorrichtung, umfassend:
ein parametrisiertes Terminierungsmodul, welches dazu konfiguriert ist, eine Vielzahl von Paketen zu empfangen und ein Paketinspektionsmodul (1500) umfasst, wobei das Paketinspektionsmodul Folgendes umfasst:

ein Verkehrsüberwachungsmodul (1520), welches dazu konfiguriert ist, die Vielzahl von Paketen gemäß einem Paketmerkmal zu filtern, um eine Vielzahl von ersten gefilterten Paketen und eine Vielzahl von zweiten gefilterten Paketen auszugeben, wobei das Paketmerkmal der Paketgröße zugeordnet ist;
ein Verbindungserfassungsmodul (1530), welches dazu konfiguriert ist, die Vielzahl von ersten gefilterten Paketen zu empfangen;
ein Strom- und Sitzungserfassungsmodul (1540), welches dazu konfiguriert ist, Informationen über Ströme, Sitzungen und Anwendungen zu erfassen, welche den gefilterten Paketen zugeordnet sind; und
ein Statusmodul (1550), welches dazu konfiguriert ist, die Informationen zu speichern,
wobei das Verkehrsüberwachungsmodul (1520) die Vielzahl von ersten gefilterten Paketen gemäß den Informationen filtert und die Vielzahl von zweiten gefilterten Paketen an einen Server überträgt,
wobei das Verkehrsüberwachungsmodul (1520), das Verbindungserfassungsmodul (1530) und das Strom- und Sitzungserfassungsmodul (1540) eine Vielzahl von Protokollstufen betreiben, welche beim Kommunizieren der Datenpakete genutzt wird,

wobei das Verkehrsüberwachungsmodul (1520) ferner dazu konfiguriert ist, die Datenpakete an einer ersten der Protokollstufen zu analysieren, um zu filtern, welche der Datenpakete durch das Verbindungserfassungsmodul (1530) und das Strom- und Sitzungserfassungsmodul (1540) analysiert werden.

2. Kommunikationsvorrichtung nach Anspruch 1, wobei das Verkehrsüberwachungsmodul (1520) ferner dazu konfiguriert ist, die empfangenen Datenpakete auf intermittierender Basis zu überwachen.

3. Kommunikationsvorrichtung nach Anspruch 1, wobei das Verkehrsüberwachungsmodul (1520) ferner dazu konfiguriert ist, eine Bitrate der Datenpakete zu überwachen zu analysieren.

4. Kommunikationsvorrichtung nach Anspruch 1, wobei die erfassten Informationen über die Anwendungen Anwendungsklassen und spezifische Anwendungen einschließen.

5. Kommunikationsvorrichtung nach Anspruch 1, wobei das Verkehrsüberwachungsmodul (1520) ferner dazu konfiguriert ist, die Datenpakete zu filtern, einschließlich eines Filterns basierend auf einer Übertragungsrichtung.

6. Kommunikationsvorrichtung nach Anspruch 1, wobei das Verkehrsüberwachungsmodul (1520) ferner dazu konfiguriert ist, die Datenpakete zu filtern, einschließlich eines Filterns basierend auf Internetprotokolladressen.

7. Kommunikationsvorrichtung nach Anspruch 1, wobei das Verkehrsüberwachungsmodul (1520) ferner dazu konfiguriert ist, die Datenpakete zu filtern, einschließlich eines Filterns basierend auf Transportschichtanschlüssen.

8. Kommunikationsvorrichtung nach Anspruch 1, wobei das Verkehrsüberwachungsmodul (1520) ferner dazu konfiguriert ist, die Datenpakete zu filtern, einschließlich eines Filterns basierend auf Nutzern, welche den Datenpaketen zugeordnet sind.

9. Kommunikationsvorrichtung nach Anspruch 1, wobei das Verkehrsüberwachungsmodul (1520) ferner dazu konfiguriert ist, Pakete zu filtern, sodass das Verbindungserfassungsmodul dazu konfiguriert ist, Uplink-Pakete zu empfangen und zu inspizieren, um das Initiieren einer TCP-Verbindung über das Erfassen einer SYN-Meldung zu erfassen.

10. Kommunikationsvorrichtung nach Anspruch 1, wobei das Verkehrsüberwachungsmodul (1520) ferner dazu konfiguriert ist, die Datenpakete zu filtern, um ein Host-Feld zu inspizieren, welches in einem HTTP-Kopf der Datenpakete enthalten ist.

11. Kommunikationsvorrichtung nach Anspruch 1, wobei das Verkehrsüberwachungsmodul (1520) ferner dazu konfiguriert ist, die Datenpakete zu filtern, einschließlich eines Filterns basierend auf einer Dienstklasse.

## Revendications

1. Dispositif de communication, comprenant :
un module de planification paramétré conçu pour recevoir une pluralité de paquets et comprenant un module d'inspection de paquets (1500), dans lequel le module d'inspection de paquets comprend :

un module de surveillance du trafic (1520) conçu pour filtrer la pluralité de paquets selon une caractéristique de paquet pour émettre une pluralité de premiers paquets filtrés et une pluralité de seconds paquets filtrés, dans lequel la caractéristique de paquet est associée à la taille du paquet ;
un module de détection de connexion (1530) conçu pour recevoir la pluralité de premiers paquets filtrés ;
un module de détection de flux et de session (1540) conçu pour détecter des informations sur les flux, les sessions et l'application associées aux paquets filtrés ; et
un module d'état (1550) conçu pour stocker les informations,
dans lequel le module de surveillance du trafic (1520) filtre la pluralité de premiers paquets filtrés en fonction des informations et transmet la pluralité de seconds paquets filtrés à un serveur,
dans lequel le module de surveillance du trafic (1520), le module de détection de connexion (1530) et module de détection de flux et de session (1540) fonctionnent à une pluralité de niveaux de protocole utilisés pour communiquer les paquets de données,

dans lequel le module de surveillance du trafic (1520) est en outre conçu pour analyser les paquets de données à un premier des niveaux de protocole pour filtrer lesquels des paquets de données seront analysés par le module de détection de connexion (1530) et le module de détection de flux et de session (1540).

2. Dispositif de communication selon la revendication 1, dans lequel le module de surveillance du trafic (1520) est en outre conçu pour surveiller les paquets de données reçus de manière intermittente.

3. Dispositif de communication selon la revendication 1, dans lequel le module de surveillance du trafic (1520) est en outre conçu pour surveiller, afin d'analyser, un débit binaire des paquets de données.

4. Dispositif de communication selon la revendication 1, dans lequel les informations détectées concernant les applications comportent des classes d'applications et des applications spécifiques.

5. Dispositif de communication selon la revendication 1, dans lequel le module de surveillance du trafic (1520) est en outre conçu pour filtrer les paquets de données comportant un filtrage sur la base d'un sens de transmission.

6. Dispositif de communication selon la revendication 1, dans lequel le module de surveillance du trafic (1520) est en outre conçu pour filtrer les paquets de données comportant un filtrage sur la base d'adresses de protocole Internet.

7. Dispositif de communication selon la revendication 1, dans lequel le module de surveillance du trafic (1520) est en outre conçu pour filtrer les paquets de données comportant un filtrage sur la base de ports de couche de transport.

8. Dispositif de communication selon la revendication 1, dans lequel le module de surveillance du trafic (1520) est en outre conçu pour filtrer les paquets de données comportant un filtrage sur la base d'utilisateurs associés aux paquets de données.

9. Dispositif de communication selon la revendication 1, dans lequel le module de surveillance du trafic (1520) est en outre conçu pour filtrer les paquets de sorte que le module de détection de connexion est conçu pour recevoir et inspecter les paquets de liaison montante afin de détecter le lancement d'une connexion TCP par le biais de la détection d'un message SYN.

10. Dispositif de communication selon la revendication 1, dans lequel le module de surveillance du trafic (1520) est en outre conçu pour filtrer les paquets de données pour inspecter un champ hôte contenu dans un en-tête HTTP des paquets de données.

11. Dispositif de communication selon la revendication 1, dans lequel le module de surveillance du trafic (1520) est en outre conçu pour filtrer les paquets de données comportant un filtrage sur la base d'une classe de service.

**FIG. 1**

EP 3 541 020 B1

**FIG. 2**

EP 3 541 020 B1

277

279

TRANSMITTER/
RECEIVER
MODULE

281

PROCESSOR
MODULE

283

STORAGE
MODULE

**FIG. 3**

Specific Application
Example

1410
Application
Program

Video Skype Program

Protocol Layers

1420
Session Layer

Video Skype Call

1430
Stream Layer

SIP Signaling ⟋1432

Voice Stream (over RTP) ⟋1434

Video Stream (over RTP) ⟋1436

1440
Connection Layer

TCP/IP

UDP/IP

UDP/IP

1450
Logical Link Layer

LTE DRB(s)

1400

**FIG. 4**

**FIG. 5**

EP 3 541 020 B1

FIG. 6

Receive input traffic 〜1205

Classify input traffic 〜1210

Segregate input traffic into scheduling groups 〜1215

Segregate data associated with groups into one or more data queues 〜1220

Determining scheduler parameters for each of the data queues 〜1225

Select data packets from each of the data queues based on scheduler parameters and place in output data queue 〜1230

Output data packets from output data queue 〜1235

**FIG. 7**

FIG. 8

**FIG. 9**

**FIG. 10**

EP 3 541 020 B1

| Application Class | Specific Application |
|---|---|
| Video chat | iChat-video |
| | Skype-video |
| Video Stream | Youtube |
| | Netflix |
| Voice | Skype |
| | Vonage |
| Gaming | NOVA |
| | Alive 4-ever |

**FIG. 11**

| Ethernet Header | IP Header | TCP Header | RTSP |
|---|---|---|---|

**FIG. 12**

EP 3 541 020 B1

**FIG. 13**

| V | P | X | CC | M | payload type | sequence number |
|---|---|---|----|---|--------------|-----------------|

| timestamp |
|-----------|

RTP Header →

| synchronization source (SSRC) identifier |
|------------------------------------------|

| contributing source (CSRC) identifiers |
|-----------------------------------------|

| F | NRI | TYPE |
|---|-----|------|

Payload header

RTP Payload
(H.264 Video) →

**FIG. 14**

Padding bit "P" is equal to 1

| V | P | X | CC | M | payload type | sequence number |

timestamp

RTP Header →  synchronization source (SSRC) identifier

contributing source (CSRC) identifiers

RTP Payload →

PaddingLength

Notes:  ▨  Padded octets

(Number of padded octets is in the last octet of RTP payload)

**FIG. 15**

| Application Class | Specific Application | Application Factor |
|---|---|---|
| Video chat | Unknown video chat | 7 |
| | iChat (video) | 5 |
| | Skype (video) | 8 |
| Video Stream | Unknown video stream | 5 |
| | Youtube | 4 |
| | Netflix | 7 |
| Voice | Unknown voice | 1 |
| | Skype (audio) | 8 |
| | Vonage | 6 |
| Gaming | Unknown gaming | 4 |
| | NOVA | 4 |
| | Alive 4-ever | 4 |
| Social Networking | Unknown social networking | 2 |
| | Facebook | 2 |
| | Twitter | 1 |
| Background Data | Unknown background data | 0 |
| | Email | 0 |
| | Search | 1 |

## FIG. 16

| Stream Index (i) | Application Class | Specific Application | AF | Prior Art W(q=1) | W1(q=i) | W2(q=i) |
|---|---|---|---|---|---|---|
| 1 | Social Networking | Facebook | 2 | 3 | 4.0 | 5.0 |
| 2 | Voice | Vonage | 6 | 3 | 6.0 | 9.0 |
| 3 | Background Data | Email | 0 | 3 | 3.0 | 3.0 |
| 4 | Video chat | Skype | 8 | 3 | 7.0 | 11.0 |
| 5 | Gaming | NOVA | 4 | 3 | 5.0 | 7.0 |

**FIG. 17**

FIG. 18

Coefficients a, b
set per policy:
a=a0, b=b0
— 1105

— 1110

Entry
conditions
met?

No

Yes

Reset timer t(i)=0
— 1120

$b(i)=b0-\Delta 1$
— 1130

— 1140

discard rate >
threshold for
stream i?

Yes

No

Is t(i) >= tdn?

No

Yes
— 1150

$b(i)=b0+\Delta 2$
— 1155

Is t(i) >= tre?

No

Yes
— 1160

**FIG. 19**

FIG. 20

Parameterized Scheduling System

300

327

395

390

307

1500

Packet Inspection Module

1550

Status Module

1570

1540

Stream and Session Detection Module

Other Logic

1530

Connection Detection Module

1510        1520

Traffic Monitoring Module                    1560

**FIG. 21**

FIG. 22

**FIG. 23**

**FIG. 24**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. SCHULZRINNE et al.** RTP Profile for Audio and Video Conferences with Minimal Control. *IETF RFC 3551*
- Transparent End-to-End Packet-switched Streaming Service, Protocols and Codecs. *3GPP TS 26.234*
- **Y. K. WANG et al.** RTP Payload Format for H.264 Video. *IETF RFC 6184*

- **ALDRIDGE, R. ; DAVIDOFF, J. ; GHANBARI, M. ; HANDS, D. ; PEARSON, D.** Recency effect in the subjective assessment of digitally-coded television pictures. *Image Processing and its Applications, 1995., Fifth International Conference,* 04 July 1995, 336-339
- **HANDS, D.S. ; AVONS, S. E.** Recency and duration neglect in subjective assessment of television picture quality. *Journal of Applied Cognitive Psychology,* 2001, vol. 15 (6), 639-657